# EUROPÄISCHE PATENTSCHRIFT

(11) **EP 1 490 286 B1**
(45) Veröffentlichungstag und Bekanntmachung des Hinweises auf die Patenterteilung: **20.12.2006**
(21) Anmeldenummer: 03744353.8
(22) Anmeldetag: 13.03.2003
(51) Int. Cl.: B66C 13/46, B65G 63/00

(54) **OPTISCHE EINRICHTUNG ZUR AUTOMATISCHEN BE- UND ENTLADUNG VON CONTAINERN AUF FAHRZEUGEN**
OPTICAL DEVICE FOR THE AUTOMATIC LOADING AND UNLOADING OF CONTAINERS ONTO VEHICLES
DISPOSITIF OPTIQUE POUR CHARGER ET DECHARGER AUTOMATIQUEMENT DES CONTENEURS SUR DES VEHICULES

(30) Priorität: 15.03.2002 DE 10212590
(43) Veröffentlichungstag der Anmeldung: 29.12.2004
(73) Patentinhaber: Gottwald Port Technology GmbH, 40597 Düsseldorf (DE)
(72) Erfinder: MOUTSOKAPAS, Jannis, 40789 Monheim (DE)
(74) Vertreter: Moser & Götze
(86) Internationale Anmeldenummer: PCT/EP2003/002575
(87) Internationale Veröffentlichungsnummer: WO 2003/078292

(56) Entgegenhaltungen:
- EP-A- 1 043 262
- EP-A- 1 182 154
- WO-A-01/81233
- DE-A- 4 005 538
- US-A- 5 142 658
- US-A- 5 780 826
- US-A1- 2002 024 598

## Beschreibung

Die Erfindung bezieht sich auf ein Verfahren zum Lastumschlag in einem Containerlager für Norm-Container, mit einem das Containerlager bedienenden, durch ein DV-System einer Logistikverwaltung steuerbaren Stapelkran für die Container, der zwischen einem Lagerplatz eines jeden Containers und einer Ladeplattform eines in dem Bereich des Containerlagers verfahrbaren Transportfahrzeuges für den Container verfahrbar ist, wobei der Stapelkran zum Aufnehmen und/oder Absetzen des Containers ein Lastaufnahmemittel von der bzw. auf die Ladeplattform aufweist, das gegenüber dieser ausrichtbar ist.

Containerlager werden zur kurzzeitiger Zwischenlagerung von Norm-Containern benötigt, um das Umladen von Containern von einem Transportmittel auf ein weiteres zu ermöglichen. Containertransportmittel sind im Allgemeinen große Containerschiffe, Eisenbahnanhänger, LKWs, Trailer oder auch AGVs (automated guided vehicles). In einem Containerhafen werden Containerschiffe entladen und die entladenen Container werden in dem Containerlager zwischengelagert, bis ein Weitertransport möglich ist. Umgekehrt werden die Container in einem Containerlager eines Containerhafens angesammelt und zwischengelagert, um anschließend auf ein Containerschiff verladen zu werden. Der landseitige Transport erfolgt durch LKWs, Trailer, Eisenbahnanhänger oder AGVs, wobei in der vorliegenden Anmeldung speziell LKWs den landseitigen Transport leisten.

Die große Anzahl der umgeschlagenen Container in einem Containerlager erfordert eine schnelle und fehlerfreie Beladung und Entladung der Transportmittel. Ein Stapelkran transportiert dabei den Container vom Containerlager zum Transportfahrzeug, und umgekehrt. Der Stapelkran kann ein automatischer Containerstapelkran (ACS) sein, aber auch ein Portalkran oder ein Halbportalkran. Das Absetzen der Container auf ein Transportmittel durch den Stapelkran wird bisher manuell gesteuert. Der Stapelkran besteht aus einer Brücke und einer darauf verfahrbaren Katze, wobei die Brücke auf Schienen verfahrbar ist. Das Absetzen auf ein Transportfahrzeug des an dem Stapelkran hängenden Containers wird durch einen Bediener manuell gesteuert. Zum Beladen fährt ein an der Parkposition anwesender Bediener den Container mittels des Stapelkrans in die Nähe des Transportfahrzeugs, um anschließend durch langsames "Heranführen" den Container exakt auf dem Transportfahrzeug zu positionieren. Das Heranführen setzt sich aus sich wiederholenden links-/rechtsfahren und vor-/zurückfahren des ACS zusammen sowie dem Absenken des Containers, gesteuert und überwacht durch den Bediener vor Ort. Ebenso wird beim Entladen des Transportfahrzeugs der Stapelkran so gegenüber dem Container manuell durch einen Bediener langsam herangeführt, dass der Stapelkran diesen aufnehmen kann.

Die große Anzahl an umgeschlagenen Containern innerhalb eines Containerlagers macht einen reibungslosen, fehlerfreien, zügigen, kostengünstigen und dauerhaften Arbeitsablauf erforderlich. Zusätzlich ist es ein Anliegen, den Durchsatz für Container, d.h. die Anzahl der umgeschlagenen Container pro Zeiteinheit zu erhöhen. Dadurch verringern sich die Standzeiten für Container innerhalb des Containerlagers, die Liegezeiten für Containerschiffe und die Aufenthaltsdauer der landseitigen Transportfahrzeuge. Gleichzeitig bedeutet dies eine Verkürzung der Transportdauer für die Container.

Aus der europäischen Patentanmeldung EP 1 043 262 A1 ist bereits ein Verfahren zum Lastumschlag von Norm-Containern in einem Containerlager bekannt. Dieses Containerlager weist einen steuerbaren Stapelkran für die Container auf, der zwischen einem Lagerplatz für die Container und einem Transportfahrzeug mit einer Ladeplattform für den Container verfahrbar ist. Der Stapelkran ist zum Absetzen bzw. Aufnahme des Containers auf bzw. von der Ladeplattform mit einem Lastaufnahmemittel versehen, dass gegenüber dem Container bzw. der Ladeplattform ausrichtbar ist. Auch weist der Stapelkran eine horizontal verfahrbare Katze mit einem Hubwerk auf, an der das Lastaufnahmemittel für die Container hängt. An dem Lastaufnahmemittel ist ein Sensor in Form eines Video-Kamerasystems angeordnet, um das Lastaufnahmemittel automatisch auf den Container abzusetzen bzw. den Container von der Ladeplattform aufzunehmen. Des Weiteren ist ein zweiter Sensor auch in Form eines Video-Kamerasystems an dem Lastaufnahmemittel befestigt, um den Stapelkran justieren zu können. Als Referenzpunkt dient hierzu eine Mauer mit optischen Elementen, die im Bereich des Stellplatzes des Transportfahrzeuges angeordnet ist.

Des Weiteren ist bereits aus der internationalen Patentanmeldung WO 01/81233 A1 ein System zum Ausrichten eines Lastaufnahmemittels für Container bekannt. Das als Spreader ausgebildete Lastaufnahmemittel weist jeweils im Bereich seiner Twistlocks zur Befestigung des Spreaders an den Eckpunkten eines Containers jeweils eine CCD-Kamera auf. Anhand des von der Kamera erhaltenen Videosignals kann ein Bediener somit diesen Spreader dann lagegenau auf einen Container in Bezug auf seine Auflagepunkte absetzen. Dieses System kann im Zusammenhang mit einem DV-System auch automatisch arbeiten.

Der Erfindung lag die Aufgabe zugrunde, einen hohen Durchsatz an Containern innerhalb eines Containerlagers zu erzielen, die Kosten zu senken und die Ausfalldauer bei Defekten zu reduzieren und gleichzeitig die Wirtschaftlichkeit des Containerumschlagplatzes zu erhöhen.

Diese Aufgabe wird erfindungsgemäß gelöst durch das angegebene Verfahren zum Beladen von Transportfahrzeugen mit Norm-Container nach Anspruch 1, durch das angegebene Verfahren zum Entladen von Transportfahrzeugen mit Norm-Containem nach Anspruch 2 und durch die angegebenen Verfahren zum Justieren der Lage eines Stapelkrans nach Anspruch 16.

Ein Vorteil der Erfindung ist das zügige und fehlerfreie Abarbeiten des Be- und Entladevorgangs von Transportfahrzeugen, die durch die Automatisierung gegeben ist. Dabei werden die immer wiederkehrenden gleichen Abläufe einer Be- und Entladung in der vorliegenden Anmeldung in Arbeitsschritte unterteilt und jeweils automatisiert. Das zeitlich übergangslose Aneinanderreihen der einzelnen automatisierten Arbeitsschritte, die jeweils einen geringeren Zeitbedarf benötigen als das Durchführen der manuellen Schritte und das fehlerfrei Abarbeiten bewirken eine vorteilhafte Verkürzung der Dauer des Be- und Entladevorgangs und somit gleichzeitig eine Steigerung des Durchsatzes von umgeschlagenen Containern.

Die Beladung eines Transportfahrzeugs mit einem Container erfolgt durch das schrittweise Abarbeiten der Schritte a) bis f) des Anspruches 1. Die Durchführung der Arbeitsschritte ruft eine Verkürzung der Ladedauer von Transportfahrzeugen für Norm-Container hervor, die zu einer Durchsatzsteigerung des Containerumschlagsplatzes führt. Die resultierende gewinnbringende Zeitersparnis des Ladevorgangs setzt sich aus den einzelnen Einsparungen zusammen, die durch die Automatisierung der Arbeitsschritte bewirkt wird. Gleichzeitig wird die Anzahl von Fehlersituationen verringert, welches sich ebenso gewinnbringend auf den Durchsatz auswirkt.

Die Entladung des mit einem Container beladenden Transportfahrzeugs wird durch das sequentielle Abarbeiten der Schritte a) bis f) des Anspruches 2 beschrieben. Die Durchführung der Arbeitsschritte ruft eine Verkürzung der Entladedauer von Transportfahrzeugen für Norm-Container hervor, die zu einer Durchsatzsteigerung des Containerumschlagsplatzes führt. Die resultierende gewinnbringende Zeitersparnis des Entladevorgangs setzt sich aus einzelnen Einsparungen zusammen, die durch die Automatisierung der Arbeitsschritte bewirkt wird. Gleichzeitig wird die Anzahl von Fehlersituationen verringert, welches sich ebenso gewinnbringend auf den Durchsatz auswirkt.

Vorteilhaft ist, dass das Transportfahrzeug und ggf. der zu entladende Container identifiziert werden und die dadurch generierten Daten an das DV-System der Logistikverwaltung übermittelt werden. Gleichzeitig generiert das DV-System der Logistikverwaltung einen Ladeauftrag bzw. Entladeauftrag für den Stapelkran. Dieser Ladeauftrag beinhaltet die Aufgabe für den Stapelkran, den zu ladenden Container im Containerlager aufzunehmen und ihn auf der Ladeplattform des Transportfahrzeuges abzusetzen, um somit das Transportfahrzeug zu beladen. Dieser Entladeauftrag beinhaltet die Aufgabe für den Stapelkran, den zu entladenden Container vom Transportfahrzeug aufzunehmen und diesen im Containerlager zu speichern. Der durch die Parallelisierung der Arbeitsschritte entstandene Zeitvorteil trägt zur Verkürzung der Dauer des Ladevorganges ebenso bei wie die Reduzierung der Fehler bei der Erfassung der Fahrzeugdaten und deren Übertragung.

Weiterhin nutzbringend ist, dass mittels eines kalibrierten Kamerasystems definierte Identifikationspunkte auf der Ladeplattform des Transportfahrzeuges bzw. des Containers erfasst und deren Koordinaten an das DV-System der Logistikverwaltung übermittelt werden. Das DV-System ermittelt aus den Identifikationspunkten die Koordinaten der Befestigungsmittel des Transportfahrzeugs bzw. des zu entladenden Containers (das zugehörige Koordinatensystem beschreibt mindestens einen Raum, den die Befestigungsmittel des Lastaufnahmemittels des Stapelkrans erreichen). Diese Methode erlaubt eine schnelle und fehlerfreie Lageerfassung der Befestigungsmittel für den Container bzw. des Containers, die zur Reduzierung der Ladedauer eines Transportfahrzeuges beiträgt.

Im besonderen Maße vorteilhaft ist, dass das DV-System der Logistikverwaltung die Koordinaten der Identifikationspunkte mit im DV-System abgelegten Daten des zu ladenden Containers vergleicht und die diesem Container zuzuordnenden Befestigungsmittel und Lagekoordinate auf der Ladeplattform des Transportfahrzeugs ermittelt. Die im DV-System abgelegten Koordinaten über die Größe des Containers können rechtzeitig mit den ermittelten Koordinaten der Befestigungsmittel des Transportfahrzeugs verglichen werden. Bei ausreichender Größe der Ladeplattform des Transportfahrzeuges für den zu ladenden Container werden die zuzuordnenden Befestigungsmittel des Transportfahrzeugs ermittelt. Für den Fall, dass die Ladeplattform des Transportfahrzeugs nicht ausreichend groß genug für den zu ladenden Container ist, kann ein frühzeitiger Abbruch des Ladevorgangs/Ladeauftrags erfolgen bzw. kann das zeitintensive Aufnehmen des Containers aus dem Containerlager durch den Stapelkran rechtzeitig verhindert werden, welches eine erhebliche Zeitersparnis darstellt.

Nach dem erfolgreichen Erfassen der Koordinaten der Befestigungsmittel kann der Ladevorgang für das in der Parkposition befindliche Transportfahrzeug sofort beginnen. Dazu fährt der Stapelkran computergesteuert mit dem zu ladenden Container über die Ladeplattform des Transportfahrzeuges exakt deckungsgleich und oberhalb der Lagekoordinate. Die sofortige und exakte Positionierung des Stapelkrans über dem Transportfahrzeug vermindert durch den Wegfall des manuellen "Heranführens" die Dauer des Ladevorgangs.

Im besonderen Maße vorteilhaft ist, dass das DV-System der Logistikverwaltung aus den ldentifikationspunkten die Befestigungsmittel und Lagekoordinate des Containers ermittelt. Dies ermöglicht die fehlerfreie und schnelle Berechnung der Lagekoordinate, für den sofortigen Start des Entladeauftrags für das Transportfahrzeug.

Dazu fährt der Stapelkran computergesteuert über den Container, exakt deckungsgleich und oberhalb der Lagekoordinate. Die sofortige und exakte Positionierung des Lastaufnahmemittels über dem zu entladenen Container vermindert durch den Wegfall des manuellen "Heranführens" die Dauer des Entladevorgangs.

Mittels eines am Stapelkran angebrachten kalibrierten Kamerasystems werden die Befestigungsmittel der Ladeplattform bzw. des Containers erfasst, und das Lastaufnahmemittel bzw. der Container wird ggf. derart bewegt, dass die Befestigungsmittel des Containers bzw. Lastaufnahmemittels deckungsgleich über den zugeordneten Befestigungsmitteln der Ladeplattform bzw. des Containers stehen. Dies ermöglicht eine zügige, fehlerfreie und korrekte Ausrichtung des Containers gegenüber der Ladeplattform bzw. des Lastaufnahmemittels gegenüber dem Container. Im Gegensatz zum bisherigen Verfahren entfällt das zeitintensive "Heranführen" des Containers bzw. des Lastaufnahmemittels durch einen an der Parkposition anwesenden Bediener. Vorteilhaft ist, dass die Sichtkontrolle somit durch einen entfernten Bediener erfolgen kann, der das Bild der mindestens einen Kamera sieht. Desgleichen trägt die pausenlose Aneinanderreihung der einzelnen Verfahrensschritte dazu bei, die Ladedauer zu reduzieren.

Durch die exakte Ausrichtung des Containers gegenüber der Ladeplattform kann der Container derartig auf der Ladeplattform des Transportfahrzeugs abgesetzt werden, dass die Befestigungsmittel des Containers in die zugeordneten Befestigungsmittel der Ladeplattform am Ende des Absetzvorgangs formschlüssig ineinander greifen. Das nachteilige "Heranführen" des Lastaufnahmemittels mit dem Container gesteuert durch einen Vorort anwesenden Bediener entfällt und bedingt somit eine vorteilhafte Zeitersparnis. Der Container wird vom Lastaufnahmemittel auf dem Transportfahrzeug abgesetzt und losgelöst. Der Ladeauftrag des Stapelkrans ist beendet.

Durch die schnelle und exakte Ausrichtung der Befestigungsmittel des Lastaufnahmemittels gegenüber dem Container kann das Lastaufnahmemittel derartig an den Container herangeführt werden, dass die Befestigungsmittel des Lastaufnahmemittels in die Befestigungsmittel des Containers formschlüssig ineinander greifen. Das nachteilige "Heranführen" des Lastaufnahmemittels an den Container gesteuert durch einen Bediener entfällt und bedingt somit eine vorteilhafte Zeitersparnis. Der Container wird vom Transportfahrzeug gelöst und kann vom Lastaufnahmemittel entladen werden, der ihn anschließend in dem Containerlager zwischenlagert. Der Entladeauftrag des Stapelkrans ist somit beendet.

Besonders gewinnbringend ist, dass vor, während und nach des Ladevorgangs bzw. Entladevorgangs ein Bediener nicht vor Ort sein muss. Ein Bediener steht somit für weitere Tätigkeiten zur Verfügung.

Insbesondere vorteilhaft ist, dass das Transportfahrzeug und ggf. der zu entladende Container mittels eines Kamerasystems identifiziert wird. Durch den Wegfall der visuellen und manuellen Identifizierung werden die entstandenen Daten schneller und fehlerfrei an das DV-System der Logistikverwaltung übermittelt.

Zur Erfassung der Koordinaten der Identifikationspunkte der Ladeplattform bzw. des Containers, wählt ein Bediener, unterstützt durch eine benutzerdefinierte Oberfläche auf einem Bildschirm des DV-Systems der Logistikverwaltung, mit einem Markierungsmechanismus die ldentifikationspunkte der Ladeplattform bzw. des Containers auf der benutzerdefinierten Oberfläche an. Die benutzerdefinierte Oberfläche zeigt das Bild des Kamerasystems. Ein Bediener, der die Identifikationspunkte der Ladeplattform bzw. des Containers des auf der benutzerdefinierten Oberfläche dargestellten Transportfahrzeugs bzw. Containers mit dem Markierungsmechanismus anwählt, trägt zur fehlerfreien Erfassung und zur schnellen Errechung der Koordinaten der Befestigungsmittel der Ladeplattform des Transportfahrzeugs bei.

Eine weitere, die Ladedauer bzw. Entladedauer verkürzende Automatisierung lässt sich realisieren, in dem die Koordinaten der Identifikationspunkte der Ladeplattform bzw. des Containers durch ein Computersystem automatisch erfasst und an die Logistikverwaltung übermittelt werden.

Der im Anspruch 1 bzw. 2 beschriebene Verfahrensschritt zur Ermittlung der Lagekoordinate ist durch zwei unterschiedliche Verfahrensweisen realisierbar. Vorteilhaft ist einmal die Erfassung der Koordinaten der Ladeplattform bzw. des Containers des Transportfahrzeugs im Be- und Entladebereich. Zu diesem Zeitpunkt ist das Transportfahrzeug bereits identifiziert und der zugeordnete Container ist ebenfalls bekannt aufgrund des Ladeauftrags. Dies ermöglicht dem DV-System der Logistikverwaltung eine frühzeitige Erkenntnis, ob das Transportfahrzeug geeignet ist, den zu ladenden Container aufzunehmen. Bei einer erfolgreichen Zuordnung der Befestigungsmittel der Ladeplattform eines Transportfahrzeugs wird der Ladevorgang weitergeführt, andernfalls wird der Ladevorgang, sofern er schon gestartet ist, abgebrochen.

Für den Fall, dass die Erfassung der Koordinaten der Ladeplattform des Transportfahrzeugs in dem endgültigen Be- und Entladebereich erfolgt ist, sind die Lagekoordinate, die durch die vertikale Lage der Ladeplattform bzw. der Oberkante der Identifikationspunkte des Containers und durch den Schnittpunkt der Diagonalen der Identifikationspunkte der Ladeplattform beschrieben wird, die absolute Zielposition des Containers. Die Anordnung ist somit äußerst geschickt und erlaubt eine zügige und somit zeitsparende Positionierung des automatischen Stapelkrans mit dem Container bzw. ohne über der zu ladenden Ladeplattform bzw. über den zu entladenden Container.

Ebenso vorteilhaft ist die weitere Ausgestaltung der Erfindung des im Anspruch 1 beschriebenen Verfahrensschrittes zur Ermittlung der Lagekoordinate. Die Erfassung der Koordinaten der Ladeplattform des Transportfahrzeugs bzw. des Containers erfolgt hierbei im Identifikationsbereich. Dies ermöglicht dem DV-System der Logistikverwaltung eine frühzeitige Erkenntnis, ob das Transportfahrzeug geeignet ist, den zu ladenden Container aufzunehmen. Bei einer erfolgreichen Zuordnung der Befestigungsmittel der Ladeplattform des Transportfahrzeugs wird der Ladevorgang weitergeführt, andernfalls wird der Ladevorgang, sofern er schon gestartet ist, abgebrochen.

Da die Erfassung der Koordinaten der Ladeplattform des Transportfahrzeugs im Identifikationsbereich erfolgt ist, beziehen sich die erfassten Koordinaten der Ladeplattform auf das Transportfahrzeug. Die vertikale Lage der Ladeplattform und der Schnittpunkt der Diagonalen der Identifikationspunkte der Ladeplattform beschreiben somit die relative Zielposition des Containers.

Die Lagekoordinate des Containers wird durch die vertikale Lage der Oberkante der Identifikationspunkte des Containers und durch den Schnittpunkt der Diagonalen der Identifikationspunkte des Containers beschrieben, die die relative Zielposition des Containers beschreibt. Durch die Wahl der Oberkante der Identifikationspunkte (Befestigungsmittel) des Containers, als ein Element der Lagekoordinate, können auch Norm-Container entladen werden, die keine Containerdecke besitzen wie Open-Top-Container, Tankcontainer und/oder Flatcontainer. Daher erlaubt die günstige Wahl der Lagekoordinate eine geschickte und somit zeitsparende Positionierung des automatischen Stapelkrans über den zu entladenden Container.

Die im Identifikationsbereich erfassten Koordinaten der Ladeplattform bzw. des Containers beziehen sich auf das Transportfahrzeug und beschreiben folglich die relative Zielposition des Containers bzw. des Lastaufnahmemittels. Vorteilhafter weise wird die Lagekoordinate durch die die absolute Zielposition des Containers bzw. Lastaufnahmemittels beschrieben, die sich aus den mittels einer Kamera ermittelten Koordinaten des in der Parkposition befindlichen Transportfahrzeugs und der relativen Zielposition des Containers bzw. des Lastaufnahmemittels zusammensetzt. Die bereits Identifikationsbereich erfassten Koordinaten werden verknüpft mit der Lage des in der Parkposition erkannten Transportfahrzeugs durch das DV-System der Logistikverwaltung. Das Ergebnis dieser Verknüpfung ist die Lagekoordinate, die die absolute Zielposition des Containers bzw. des Lastaufnahmemittels ist. Dies erlaubt eine geschickte und somit zeitsparende Positionierung des automatischen Stapelkrans mit dem Container über der zu ladenden Ladeplattform bzw. dem zu entladenden Container, die nachstehend beschrieben wird.

Unabhängig davon, wo die Erfassung der Koordinaten erfolgt, ist eine vorhandene Fehlstellung eines oder mehrerer Befestigungsmittel auf der benutzerdefinierten Oberfläche des DV-Systems sichtbar. Der Bediener erkennt die vorhandenen Fehlstellungen und benachrichtigt den Fahrer des Transportmittels infolgedessen. Dieser korrigiert die etwaigen Fehlstellungen der Befestigungsmittel rechtzeitig.

Unabhängig vom gewählten Weg zur Erfassung der Koordinaten ermöglicht die vorteilhafte Wahl der Lagekoordinate, dass das Lastaufnahmemittel den Container bzw. das Lastaufnahmemittel derart in Reichweite der Ladeplattform bzw. des Containers bewegt, dass der Schnittpunkt der Diagonalen der Befestigungsmittel des Containers bzw. Lastaufnahmemittels deckungsgleich im Lot über dem Schnittpunkt der Diagonalen der Befestigungsmittel der Ladeplattform bzw. des Containers steht. Der an dem Stapelkran hängende Container bzw. das Lastaufnahmemittel befindet sich infolgedessen mittig über der Ladeplattform bzw. dem Container und muss demgegenüber ggf. in dem folgenden Arbeitsschritt durch eine Drehbewegung des an dem Lastaufnahmemittel hängenden Containers bzw. Lastaufnahmemittels ausgerichtet werden. Dazu muss der Stapelkran nicht weiter verfahren werden, d.h. die Brücke eines ACS und die darauf verfahrende Katze haben ihre endgültige exakte Ladeposition bereits erreicht. Das schrittweise Heranführen des Lastaufnahmemittels gesteuert durch einen Bediener entfällt in vorteilhafter Weise. Diese Vorgehensweise vereinfacht das Positionieren des Lastaufnahmemittels bzw. des Stapelkrans enorm und trägt somit zu einer außerordentlich großen Reduzierung der benötigten Ladedauer bzw. Entladedauer bei.

Die einfache Kontrolle des Ladevorgangs bzw. Entladevorgangs durch einen Bediener ist durch eine zweite benutzerdefinierte Oberfläche mit 4 Quadranten gegeben, die jeweils ein Paar Befestigungsmittel darstellen, wobei das Paar jeweils aus einem Befestigungsmittel der Ladeplattform bzw. des Containers, abgebildet durch ein Bild des Kamerasystems, und aus dem zugeordneten Befestigungsmittel' des Containers bzw. des Lastaufnahmemittels besteht, abgebildet durch eine Einblendung einer computerberechneten Kontur des Containers bzw. des Lastaufnahmemittels inklusive und des Befestigungsmittels über dem Bild. Der Bediener kontrolliert somit komfortabel den Ladevorgang bzw. Entladevorgang, ohne an der Parkposition anwesend sein zu müssen.

Es ist ein außerordentlicher Vorteil der vorliegenden Erfindung, dass die ggf. vorhandene Abweichung der Lage des zu ladenden Containers bzw. des Lastaufnahmemittels gegenüber der Lage der Ladeplattform bzw. des zu entladenden Containers im DV-System der Logistikverwaltung zur Feinpositionierung bestimmt werden kann, indem die zweite benutzerdefinierte Oberfläche der Logistikverwaltung ein Markierungsmechanismus aufweist, mit dem der Bediener mindestens einen ldentifikationspunkt der Ladeplattform bzw. des Containers anwählt. Die so ermittelte exakte Ausrichtung der Ladeplattform bzw. des Containers wird zum Ausrichten des Containers gegenüber der Ladeplattform bzw. des Lastaufnahmemittels benötigt. Eine vom DV-System der Logistikverwaltung erkannte Abweichung der Ausrichtungen führt im nächsten Schritt des Arbeitsablaufs zu einer Richtigstellung des Containers bzw. des Lastaufnahmemittels. Die einfache Erfassung der Lage der Ladeplattform bzw. des Containers, die direkte Verfügbarkeit der Daten im DV-System der Logistikverwaltung sowie der Ausschluss von Fehler in den Daten führen zu einer außerordentlichen Zeitersparnis.

Ebenso vorteilhaft ist die Ausgestaltung der Erfindung derart, dass die ggf. vorhandene Abweichung der Lage des zu ladenden Containers bzw. des Lastaufnahmemittels gegenüber der Lage der Ladeplattform bzw. des zu entladenden Containers zur Feinpositionierung durch ein Computersystem automatisch erkannt wird.

Bei einer vorhandenen Abweichung der Lage des zu ladenden Containers bzw. des Lastaufnahmemittels gegenüber der Lage der Ladeplattform bzw. des zu entladenden Containers wird der Container bzw. das Lastaufnahmemittel so gedreht, dass die Befestigungsmittel des Containers bzw. des Lastaufnahmemittels deckungsgleich im Lot über den Befestigungsmitteln der Ladeplattform bzw. des Containers stehen. Das somit schnelle und korrekte Ausrichten des Containers gegenüber der Ladeplattform bzw. des Lastaufnahmemittels gegenüber dem Container erfolgt automatisch auf Basis der berechneten Abweichung. Ungemein vorteilhaft ist, dass eine Neigung des Transportfahrzeuges in dessen Längs-und/oder Querrichtung, verursacht z.B. durch einen unebenen Untergrund, sich nicht schädlich auf den Ladevorgang auswirkt. Das schrittweise Heranführen des Lastaufnahmemittels mit dem Container bzw. ohne gegenüber der Ladeplattform bzw. dem Container entfällt, welches eine außerordentliche Reduzierung des Zeitbedarfs zur Ladung bzw. Entladung eines Transportfahrzeuges bewirkt.

Das zügige Absetzen und Loslösen des Containers vom Lastaufnahmemittel bzw. das zügige Heranführen des Lastaufnahmemittels zur Aufnahme des Containers bis zum formschlüssigen Ineinandergreifen der Befestigungsmittel wird durch einen Bediener oder automatisch durch ein Computersystem gesteuert. Da der Container bzw. das Lastaufnahmemittel sich exakt über der Ladeplattform bzw. dem Container befindet, korrekt ausgerichtet ist und das DV-System die vertikale Lage der Ladeplattform bzw. des Containers bestimmt hat, kann eine unverzügliche kontinuierliche Absetzbewegung des Containers bzw. des Lastaufnahmemittels durchgeführt werden, die eher als das manuelle "Heranführen" abgeschlossen werden kann. Das Ineinandergreifen der Befestigungsmittel des Containers und in der Ladeplattform schließt das Absetzen des Containers ab. Nachdem das Lastaufnahmemittel nicht mehr durch den Container belastet wird, welches durch das Auslösen von Drucksensoren angezeigt wird, kann dieser vom Lastaufnahmemittel gelöst und am Transportfahrzeug befestigt werden. Das Ineinandergreifen der Befestigungsmittel des Lastaufnahmemittels und in der des Containers schließt das Aufnehmen des Containers ab. Der Container wird am Lastaufnahmemittel befestigt, und der Stapelkran lagert ihn im Containerlager zwischen. Der Entladeauftrag ist somit abgeschlossen.

Die ineinanderfließenden der sequentiellen Verfahrensschritte ermöglichen eine schnelle Be- und Entladung eines Transportfahrzeuges. Die dadurch eingesparte Zeit steht für andere Be- bzw. Entladevorgänge zur Verfügung. Infolgedessen kann der Durchsatz der umgeschlagenen Container eines Containerlagers erhöht werden, welches eine Effizienzsteigerung darstellt und ebenso eine Reduzierung der Transportdauer der transportierten Fracht.

Des Weiteren vorteilhaft ist, dass eine Justierung eines Stapelkrans jederzeit und mit geringem Aufwand unter Anwendung des in Anspruch 16 beschriebenen Verfahrens möglich ist. Dabei ist im Vorfeld zu beachten, dass geometrische Abweichungen einer zur Verwendung am Stapelkran vorgesehene Kamera u.a. durch Bauteiltoleranzen, Fertigungstoleranzen, Ungleichmäßigkeiten in der Linse und/oder optische Fehler hervorgerufen werden, die durch eine vor der Verwendung der Kamera zu erfolgende Kalibrierung umgehbar sind. Während des Betriebes wird das Bild aus einer am Stapelkran eingesetzten Kamera mittels eines aus der Kalibrierung hervorgegangenen Korrekturalgorithmus kontinuierlich korrigiert. Somit wird auf jedes Bild einer Kamera durch das DV-System der Logistikverwaltung der kameraspezifische Korrekturalgorithmus angewendet. Folglich weist jede eingesetzte Kamera unter Anwendung des ihr zugeordneten Korrekturalgorithmus identische optische Eigenschaften auf. Zusätzlich ermöglicht die vorgelagerte Kalibrierung dem DV-System der Logistikverwaltung eine Distanzmessung der betrachteten bekannten Objekte nach den Gesetzmäßigkeiten des Strahlensatzes.

Unter Anwendung dieser kalibrierten Kameras ist nun eine weitere Justierung der Lage des Stapelkrans durchführbar. Gemäß Anspruch 16 fährt zuerst der Stapelkran derart über einen an einer beliebigen Position innerhalb des Containerlagers angebrachten Referenzpunkt, dass mindestens eine Kamera des Kamerasystems den Referenzpunkt erfasst. Das DV-System der Logistikverwaltung vergleicht die neue, aus dem Kamerabild berechnete Lage des Referenzpunktes mit der ihm bekannten Lage des Referenzpunktes und ermittelt bei ggf. vorhandener Abweichung einen Offset für den Stapelkran. Unter der Prämisse, dass der Referenzpunkt sich in der Regel nicht verschiebt, kann eine Korrektur der Lagekoordinate des Stapelkrans erfolgen, indem das DV-System der Logistikverwaltung den berechneten Daten der Position des Stapelkrans den Offset hinzuaddiert. Gewinnbringend ist dies speziell im Fall einer Längenänderung der Fahrschienen des automatischen Containerstapelkrans (ACS), die Aufgrund der Temperaturen im Sommer eine Längendehnung und im Winter eine Zusammenziehung der Fahrschienen ist. Da das DV-System der Logistikverwaltung die Position über eine absolute Langenmessung der zurückgelegten Wegstrecke des Stapelkrans bestimmt, können die temperaturunempfindlichen Anordnungen und Positionen, die der Stapelkran tatsächlich anfährt, gegenüber der durch das DV-System der Logistikverwaltung berechneten Lage verschoben sein. Vorteilhafter weise kann somit eine durch diese Einflussfaktoren hervorgerufene fehlerhafte Berechung der Position des Stapelkrans korrigiert werden. Besonders vorteilhaft ist dabei die schnelle beliebig häufige und jederzeit durchführbare Justierung des Stapelkrans.

Insbesondere vorteilhaft ist die Anordnung von mehreren Referenzpunkten innerhalb des Containerlagers. Nachdem der Stapelkran sich oberhalb einer dieser Referenzpunkte platziert hat, kann das DV-System der Logistikverwaltung die bereits ihm bekannte Lage des Referenzpunktes mit der neuen, aus einem Kamerabild berechneten Lage miteinander vergleichen, und ggf. den dem Referenzpunkt zugeordneten Offset für den Stapelkran berechnen. Für den Fall, dass sich mehrere Referenzpunkte entlang des linearen Fahrweges des Stapelkrans befinden und dass einer der Offsets der in einem engen Zeitbereich ermittelten Offsets dieser Referenzpunkte, eine nicht systematische Abweichung aufzeigt, deutet dies auf eine Bodenverwerfung in der Nähe des betroffenen Referenzpunkts hin, die anschließend in die Berechungen zur Positionierung des Stapelkrans durch das DV-System der Logistikverwaltung korrigierend eingebracht wird. Hierdurch können etwaige Fehlinterpretationen von Längendehnungen vermieden werden.

Besonders vorteilhaft ist, dass das Containerlager einen Superreferenzpunkt aufweist, mit dem jede Kamera am Stapelkran justiert gegenüber diesen werden kann. Das durch einen technischen Defekt o.ä. hervorgerufene Austauschen einer am Stapelkran angebrachten Kamera macht das einmalige Justieren einer neu installierten Kamera am Stapelkran erforderlich. Unter Verwendung des Superreferenzpunktes kann einer am Stapelkran neu montierten Kamera ein ihr zugeordneter Korrekturvektor durch das DV-System der Logistikverwaltung bestimmt werden. Die Reparatur- und Justierzeit und somit die Ausfallzeit des Stapelkrans wird gewinnbringend verkürzt. Der Superreferenzpunkt ist dabei vorteilhafter weise an einer Position im Containerlager angebracht, die unabhängig vom Fremdeinflüssen der oben beschriebenen Art ist. Der Stapelkran fährt mit der neu installierten und bereits kalibrierten Kamera derart über den Superreferenzpunkt, dass die neu installierte Kamera diesen erfasst. Das DV-System ermittelt die Lage des Superreferenzpunktes und vergleicht die so gewonnenen Daten mit den bereits abgelegten Daten des Superreferenzpunkts. Bei einer ggf. vorhandenen Abweichung der Daten wird der neu eingebauten Kamera ein Korrekturvektor zugeordnet, der bei jeder Lageberechnung, die basierend auf dieser Kamera durchgeführt wird, angewendet wird. Die durch die zügige Justierung der neu eingebauten Kamera am Stapelkran gewonnene Zeitersparnis kann nutzbringend für Be- und Entladevorgänge verwendet werden.

### Figurenbeschreibung:

- Fig. 1: Übersichtsplan eines Containerumschlagplatzes,
- Fig. 2: Identifikationsbereich zur Erfassung der Transportfahrzeuge,
- Fig.3: Ausschnitt aus einem Containerumschlagplatz, Containerlager und Parkposition,
- Fig. 4: Seitenansicht des in Fig. 3 gezeigten Bereichs,
- Fig. 5: Darstellung des Blickwinkels der in der Parkposition angebrachter Kamera,
- Fig. 6: erste benutzerdefinierte Oberfläche,
- Fig. 7: Darstellung des Sichtwinkels der an dem automatischen Containerkran seitlich angebrachten Kameras,
- Fig. 8: Darstellung des Sichtwinkels der an dem automatischen Containerkran seitlich angebrachten Kameras,
- Fig. 9: zweite benutzerdefinierte Oberfläche, während eines Ladevorgangs,
- Fig. 10: benutzerdefinierte Oberfläche am Ende eines Ladevorgangs,
- Fig. 11: weitere Ausführung eines Identifikationspunkts,
- Fig. 12: weiterer Ausschnitt aus einem Containerumschlagplatz, Containerlager und Parkposition,
- Fig. 13: weitere Darstellung des Blickwinkels der in der Parkposition angebrachter Kamera,
- Fig. 14: Darstellung der Anordnung eines Referenzpunktes.

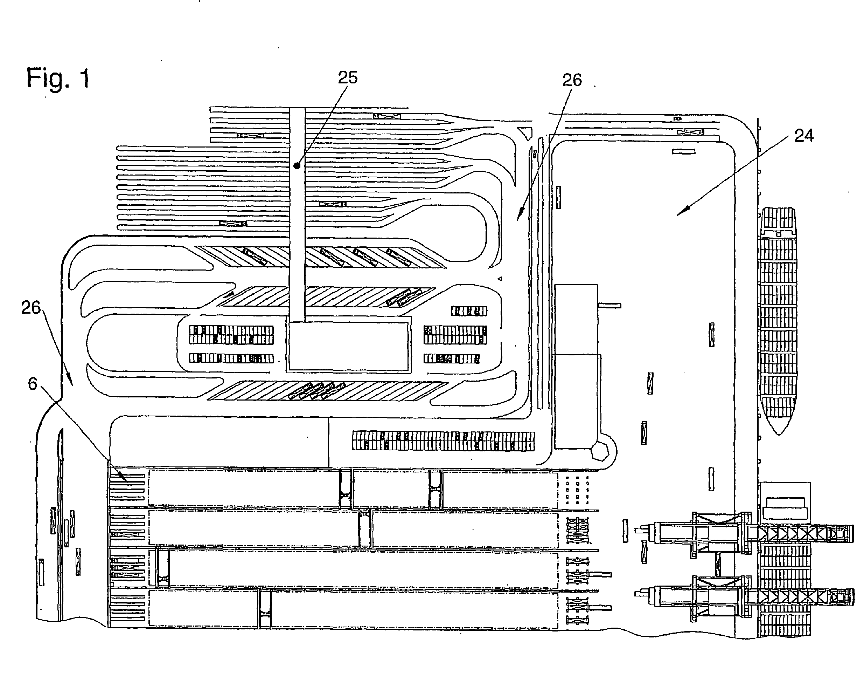

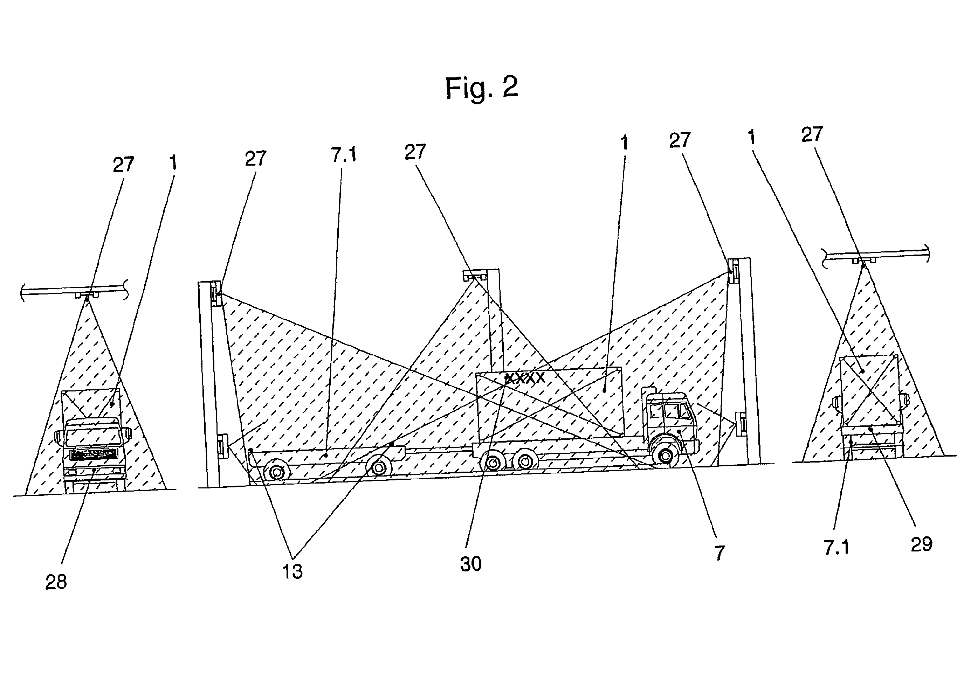

Fig. 1 zeigt ein automatisiertes Containerterminal 24 für Container 1, in dem landseitig LKWs 7 (Fig. 2) entladen bzw. beladen werden. In einen Identifikationsbereich 25 werden ankommende und abfahrende LKWs 7 identifiziert und/oder vermessen. Ein ankommender LKW 7 wird identifiziert und die so generierten Daten, die zur Be- bzw. Entladung nötig sind, werden an das (nicht dargestellte) DV-System der Logistikverwaltung übermittelt. Hernach wird der LKW 7 über Wege 26 zum Be- bzw. Entladebereich 6 gefahren.

Fig. 2 zeigt die im ldentifikationsbereich 25 angebrachten Kameras 27, mit denen der LKW 7 von allen Seiten erfasst wird. Das amtl. Nummernschild 28 des LKWs 7 und ggf. das amtl. Nummernschild 29 des Trailers 7.1 wird mittels der Kameras 27 automatisch erfasst. Ebenso wird bei beladenen LKWs 7 zusätzlich die Identifikationsnummer 30 des Containers 1 erfasst. Alle Informationen bezüglich des LKWs 7, des Trailers 7.1 und ggf. des Containers 1 werden an das DV-System der Logistikverwaltung übermittelt und sind jederzeit im System verfügbar und ggf. durch einen (nicht dargestellten) Bediener abrufbar.

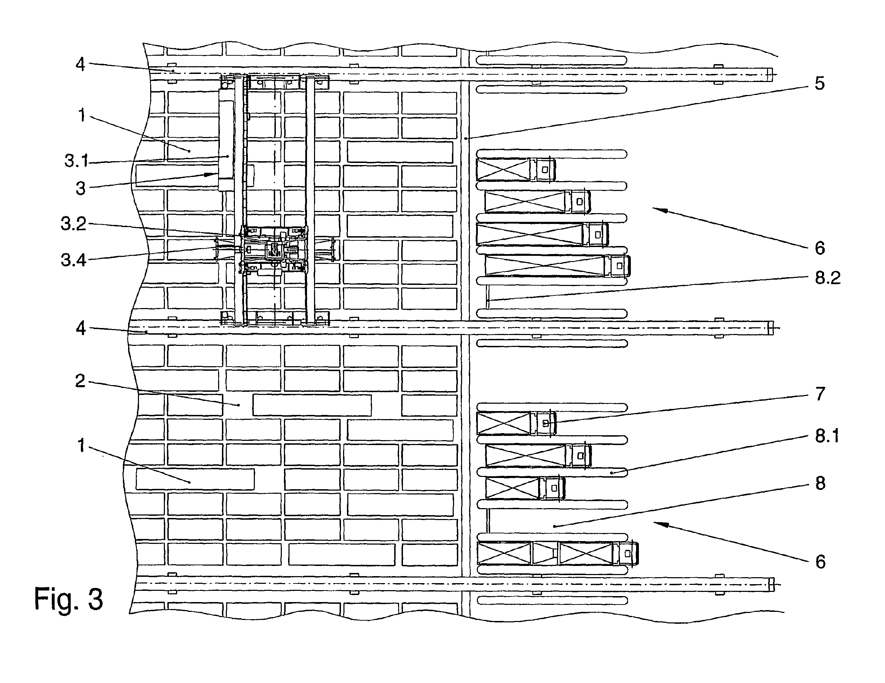

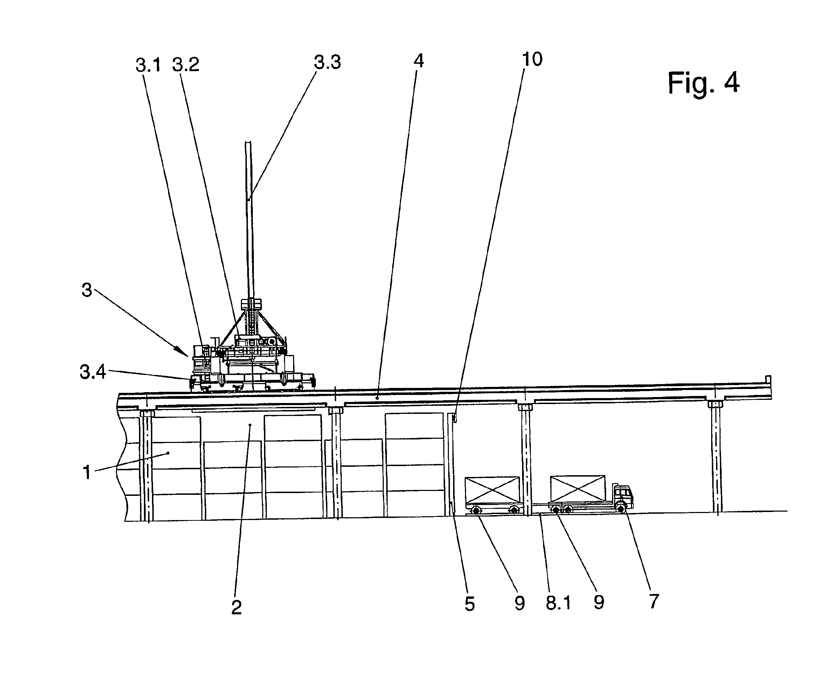

In dem automatischen Containerlager 2, wie in Fig. 3 und 4 dargestellt, sind die Container 1 gestapelt gelagert. Der automatische Stapelkran 3 besteht aus einer fahrbaren Katze 3.2, die verfahrbar auf einer Brücke 3.1 ist, wobei die Brücke 3.1 verfahrbar auf der Kranbahn 4 ist. Während des Ladevorgangs ist der Container 1 starr mit dem verfahrbaren Mast 3.3 der verfahrbaren Katze 3.2 verbunden. Am Mast 3.3 befindet sich das Lastaufnahmemittel 3.4 des Stapelkrans 3, das die Container aufnimmt. Der automatische Stapelkran 3 ist mit dem DV-System der Logistikverwaltung gekoppelt und kann somit jederzeit jede mögliche Koordinate innerhalb des verfahrbaren Bereichs erreichen. Das (nicht dargestellte) Koordinatensystem beschreibt einen Raum, den das Lastaufnahmemittel 3.4 des verfahrbaren automatischen Stapelkrans 3 erreicht. Anstelle eines ACS können auch Portalkrane oder Halbportalkrane eingesetzt werden.

Das automatische Containerlager 2 wird durch eine Abgrenzung 5, welche ein Zaun oder eine Mauer sein kann, vom Be- bzw. Entladebereich 6 abgegrenzt. Im Be- bzw. Entladebereich 6 werden die LKWs 7 in jeweils einer Parkposition 8 positioniert. Fig. 3 und Fig.4 zeigen LKWs 7, die in einer Parkpositionen 8 rückwärts eingeparkt worden sind, welche vorgegeben wurde. Die Parkpositionen 8 weisen seitliche Betontröge 8.1 auf, die das rückwärts Einparken des LKWs 7 erleichtern, indem die Räder 9 des LKWs 7 hieran geführt werden. Der Einparkvorgang ist abgeschlossen, wenn der rückwärtsfahrende LKW 7 an den die Parkposition 8 begrenzenden Querstreben 8.2 mit den Rädern 9 angestoßen ist.

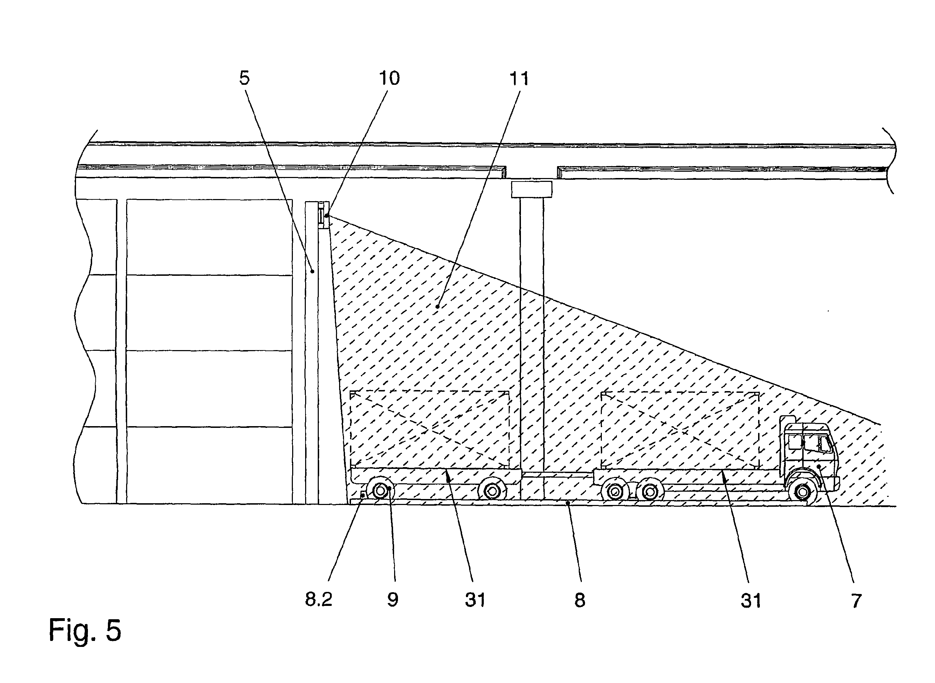

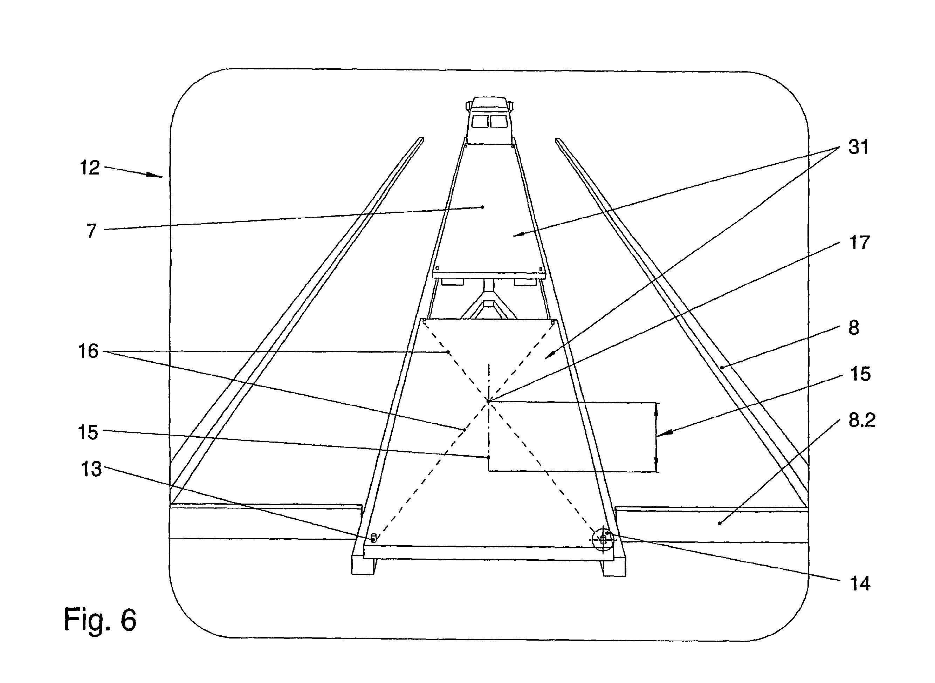

Jede Parkposition 8 ist mit einem ortsfesten kalibrierten Kamerasystem 10 ausgestattet, welches sich oberhalb der Abgrenzung 5 befindet (Fig. 5). Der Blickwinkel 11 der Kamera 10 ist so gewählt, dass alle Ladeplattformen 31 des LKWs 7 und ggf. alle darauf befindlichen Container 1 komplett erfasst werden. Durch diesen Blickwinkel 11 der Kamera 10 kann ein Bediener auf einem Monitor 12 (Fig. 6) den Einparkvorgang beobachten.

Fig. 6 zeigt den Monitor 12 mit dem Bild der Kamera 10, mit dem der Bediener den Einparkvorgang des LKWs 7 und den Be- bzw. Entladevorgang beobachten und kontrollieren kann. Zum Beladen des LKWs 7 in der Parkposition 8 muss die Lage der Ladeplattform 31 des LKWs 7 vermessen werden. Dazu ist dem Bild der Kamera 10 ein Markierungsmechanismus, z.B. ein Fadenkreuz 14, überlagert, mit dem der Bediener Identifikationspunkte anwählen kann. Diese Identifikationspunkte sind die Befestigungsmittel der Ladeplattform 31 des LKWs 7, die so genannten Twistlocks 13. Die Koordinaten der Twistlocks 13 werden zur Berechnung der Lagekoordinate der Ladeplattform 31 an das DV-System der Logistikverwaltung übermittelt. Dabei errechnet das DV-System der Logistikverwaltung die Diagonalen 16 der Twistlocks 13 und deren Schnittpunkt 17. Der Schnittpunkt 17 beschreibt u.a. die vertikale Lage 15 der Ladeplattform im Koordinatensystem. Diese Berechnung ist durch ein vorheriges Kalibrieren der ortsfesten installierten Kamera 10 ermöglicht, deren exakte Lage und Blickrichtung bekannt ist.

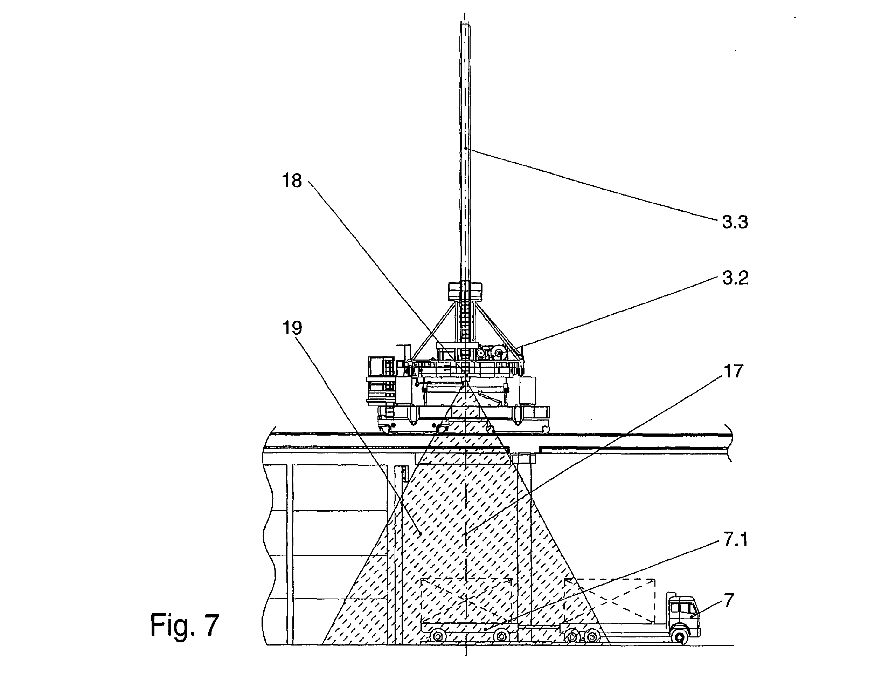

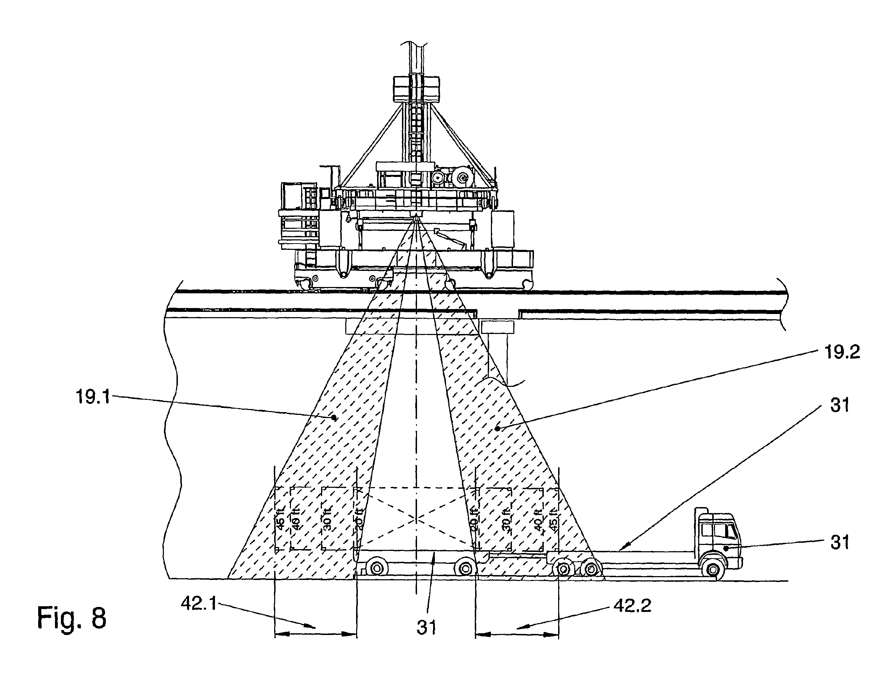

Der an dem starren Mast 3.3 des Stapelkrans 3 befindliche Container 1 wird, wie in Fig. 7 dargestellt, so über der Ladeplattform 31 des LKWs 7 positioniert, dass der Schnittpunkt der Diagonalen der Befestigungsmittel des Containers 1 deckungsgleich im Lot über den Schnittpunkt 17 der Diagonalen 16 der Befestigungsmittel der Ladeplattform 31 des LKWs 7 steht. Durch die an den Stapelkran 3 angebrachten Kameras 18 und durch die gewählte Art der Positionierung des zu ladenden Containers 1 über der Ladeplattform 31 kann der Blickwinkel 19 der Kameras 18 eingeschränkt werden, wie in Fig. 8 dargestellt ist. Aufgrund der unterschiedlichen Containergröf3en von 20ft, 30ft, 40ft bis 45ft sind links wie rechts zwei Blickwinkel 19.1 und 19.2 erforderlich, die den mittleren Bereich des Containers 1 vemachlässigen. Bezogen auf die Koordinate des Schnittpunktes 17 der Diagonalen 16 der Ladeplattform 31 ist ein Sichtbereich des Kamerasystems 42.1 von -7m bis -3m und ein Sichtbereich des Kamerasystems 42.2 von +3m bis +7m nötig. Nur in diesen Bereichen sind die zum Container 1 passenden Twistlocks 13 der Ladeplattform 31 vorhanden.

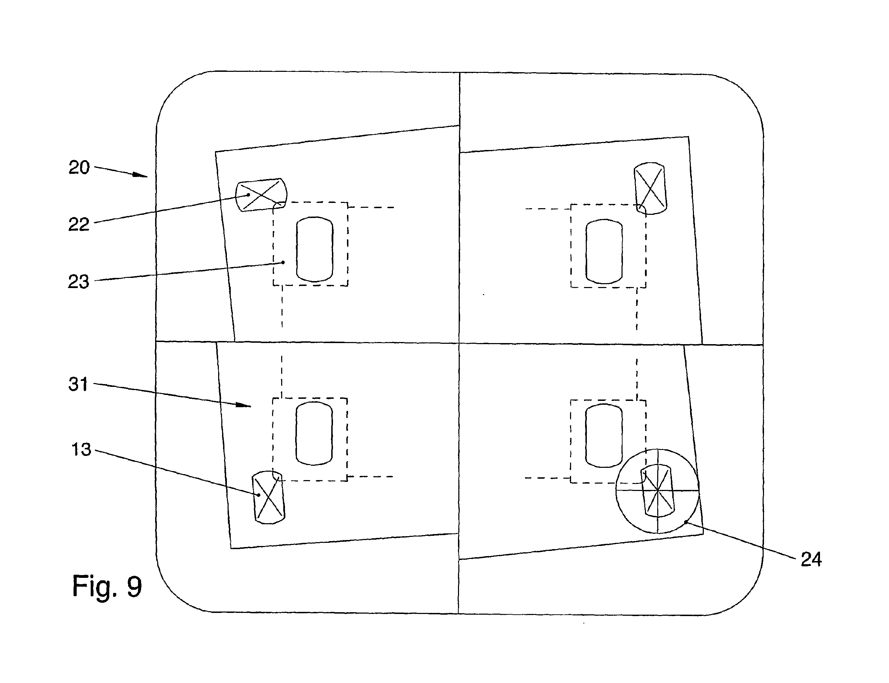

Fig. 9 zeigt die viergeteilte, benutzerdefinierte Oberfläche 20 des DV-Systems der . Logistikverwaltung. Jeder Quadrant zeigt dabei einem Bildausschnitt, der von mindestens einer der an dem Stapelkran 3 seitlich angebrachten Kameras 18 erzeugt wird. Aus Redundanzgründen und Zuverlässigkeitsüberlegungen können die vier Bildausschnitte aus dem Bild einer Kamera erzeugt werden, oder auch aus zwei Bildern von zwei seitlich angebrauchten Kameras. Ebenso realisierbar ist eine Lösung, die jeweils eine Kamera für jeweils ein Bildausschnitt vorsieht. Jeder Bildausschnitt zeigt die Befestigungsmittel, die Twistlocks 13 der Ladeplattform 31. Die Fehlstellung eines Twistlocks 22 kann der Bediener erkennen, der dann über eine Gegensprechanlage den Fahrer des LKWs 7 auffordert, diese Fehlstellung zu beseitigen. Die computerberechneten Konturen des Containers 23 werden dem Bild überblendet, welches dem Bediener die tatsächliche Lage des Containers 1 andeutet. Die Ausrichtung des Containers 1 gegenüber der Ladeplattform 31 wird durch den Bediener vorgenommen, indem der Bediener ein Markierungsmechanismus, z.B. ein Fadenkreuz 24 verwendet, um die Befestigungsmittel, die Twistlocks 13 der Ladeplattform 31 erneut anzuwählen. Die Koordinaten der Befestigungsmittel der Ladeplattform 31 werden erneut an das DV-System der Logistikverwaltung übermittelt. Die tatsächliche Ausrichtung der Ladeplattform 31 wird daraus berechnet. Eine ggf. vorhandene Abweichung zwischen der Ausrichtung des Containers 1 und der Ausrichtung der Ladeplattform 31 wird vom dem DV-System der Logistikverwaltung bestimmt und der Container 1 wird am Mast 3.3 mittels des Lastaufnahmemittels 3.4 derart gedreht, dass sämtliche Befestigungsmittel des Containers 1 deckungsgleich im Lot über den Befestigungsmitteln der Ladeplattform 31 stehen.

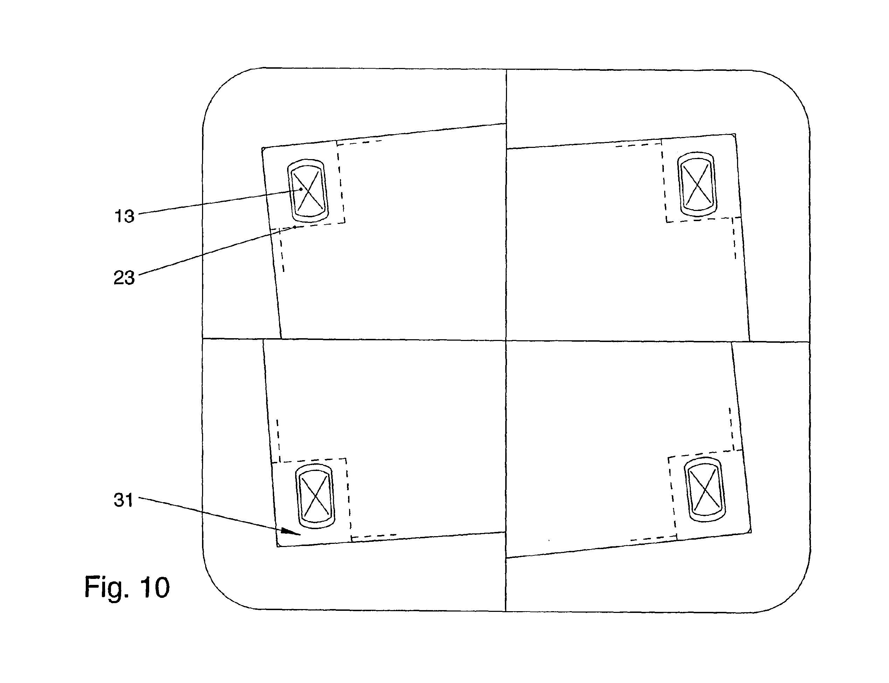

Während des Absenkvorgangs wird die computerberechnete Kontur 23 des Containers jederzeit neu berechnet und dem bei Beginn des Absenkvorgangs eingefrorenem Bild überblendet, wie in Fig. 10 dargestellt wird. Am Ende des Absenkvorgangs greifen die Befestigungsmittel des Containers 1 in die Befestigungsmittel der Ladeplattform 31 des Lkws 7. Der Bediener überwacht und kontrolliert den Ladevorgang am Monitor beim Absetzen des Containers 1.

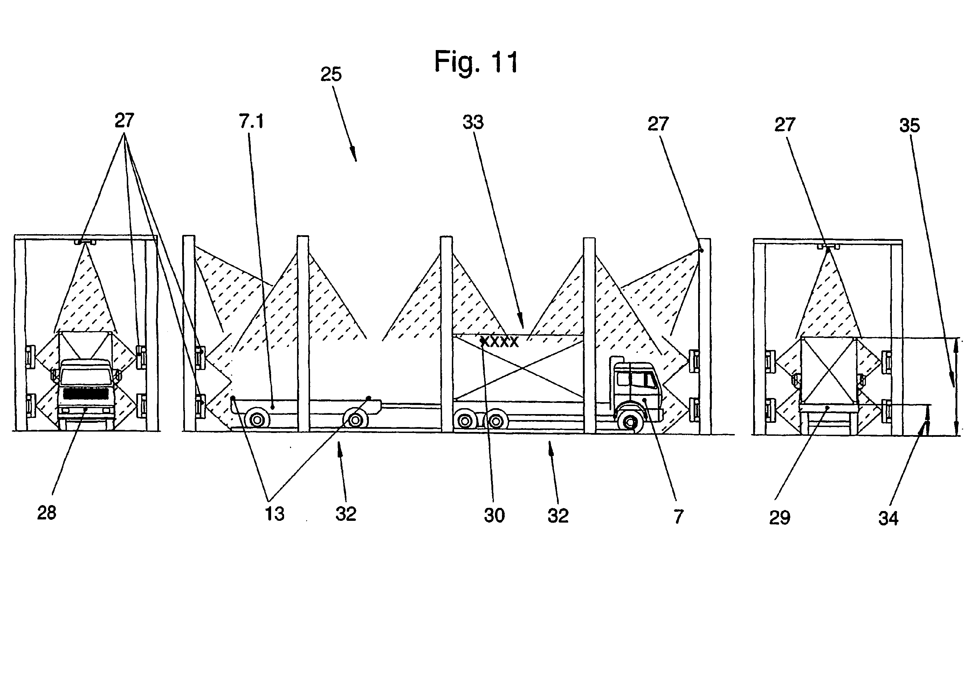

Ein weiteres Verfahren zur Erfassung der Identifikationspunkte der Ladeplattform 31 eines LKWs 7 bzw. der Identifikationspunkte eines Containers 1 zeigen die Figuren 11 bis 13. Dabei werden bekannte Verfahrenschritte des bisher beschriebenen Verfahrens neu arrangiert.

Fig. 11 zeigt einen modifizierten Identifikationsbereich 25, in dem der ankommende LKW 7 inklusive eines evtl. vorhandenen Containers 1 identifiziert wird. Zur Identifizierung des LKWs 7 gehört die Erkennung der amtl. Kennzeichen 28, 29 der Transportfahrzeuge und der Identifikationsnummer 30 des ggf. vorhandenen Containers 1 mittels der an dem Identifikationsbereich 25 angebrachten Kameras 27, die mit dem DV-System der Logistikverwaltung in Verbindung stehen und dem die so generierten Daten übermittelt werden. Zusätzlich zu dem zu Fig. 2 beschriebenen Arbeitschritt werden anschließend der ggf. vorhandene Container 1 und/oder die leere Ladeplattform 31 des LKWs 7 vermessen. Dabei wird der LKW 7 von der Seite 32 und von oben (Draufsicht) 33 mittels der Kameras 27 erfasst. Die in Fig. 6 beschriebene Erfassung der Identifikationspunkte der Ladeplattform 31 (oder Containers 1) erfolgt im Gegensatz zu Fig. 6 nicht im Be- und Entladebereich 6, sondern im Identifikationsbereich 25. Der Ablauf der Erfassung der Identifikationspunkte bleibt dabei identisch. Gleichzeitig erfolgt eine automatische Höhenvermessung 34, 35 der zu verwendenen Befestigungsmittel mittels der Kameras 27. Die ermittelten Koordinaten werden dem DV-System übermittelt, wobei diese die relative Zielposition des zu entladenen Containers darstellen, da diese sich nur auf den LKW 7 beziehen. Der Fahrer des LKWs 7 erhält nach erfolgreicher Identifizierung und Vermessung des LKWs 7 eine Zutrittsberechtigung in Form einer (nicht dargestellten) Magnetkarte oder auch Chipkarte. Auch die Magnetkarte enthält alle relevanten Daten bezüglich des Umschlagauftrages.

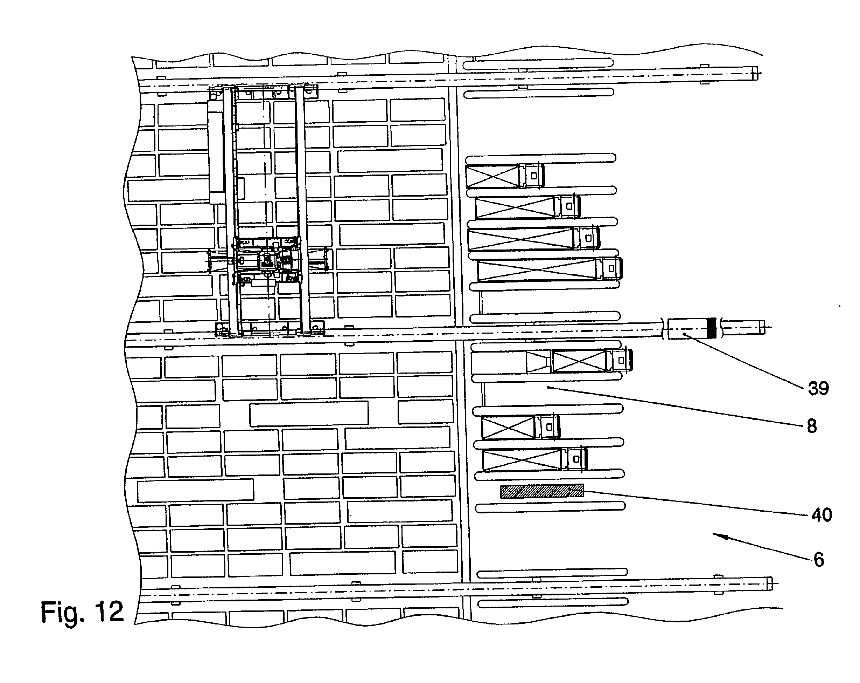

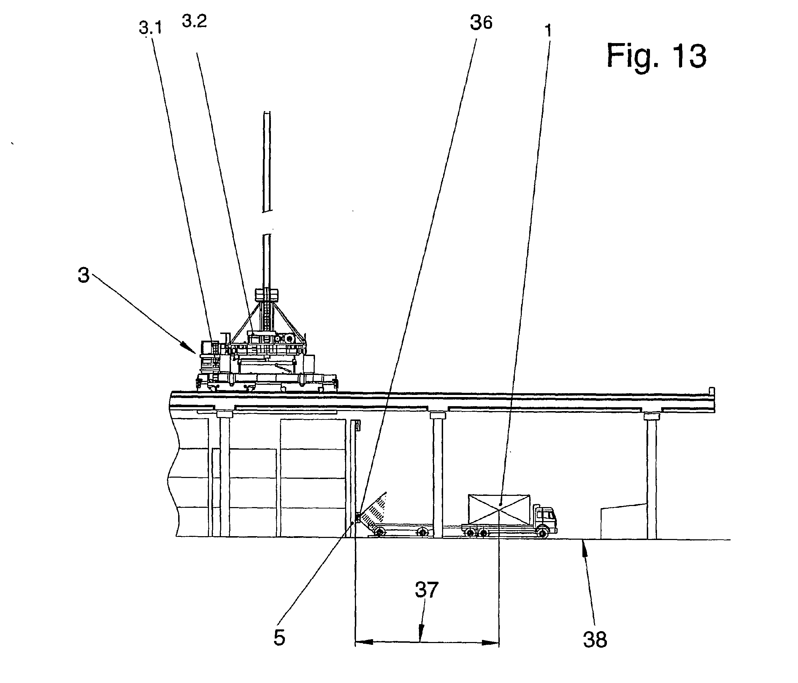

Der Fahrer fährt mit dem LKW 7 in einem ihm zugewiesenen Be- und Entladebereich 6 (Fig. 12) und parkt sein Transportfahrzeug in einer beliebigen Parkposition 8 rückwärts innerhalb des Be- und Entladebereichs 6 ein. Während des Einparkvorgangs wird, wie in Fig. 13 dargestellt, mittels einer in der Parkposition 8 angebrachten Kamera 36 im DV-System der Logistikverwaltung eine Objekterkennung gestartet, die den LKW 7 identifiziert und auch geometrisch in das nicht dargestellte Koordinatensystem einordnet. Die Informationen aus der an der Abgrenzung 5 angebrachten Kamera 36 ermöglichen dem DV-System der Logistikverwaltung eine exakte Erkennung des LKWs 7 hinsichtlich seiner Identität und Lage: sein Abstand 37 zur Abgrenzung 5, ein links/rechts Versatz innerhalb der Parkposition 8 und Verdrehwinkel des LKWs 7 gegenüber der Untergrund 38. Nach Beendigung des Einparkvorgangs ist somit dem DV-System der Logistikverwaltung die exakte Lage des LKWs 7 bekannt. Aus diesen Koordinaten heraus und in Verbindung der relativen Zielposition des Containers 1 kann das DV-System der Logistikverwaltung die Lagekoordinate für den zu ladenden Container 1 ermitteln, die die absolute Ziel koordinate für den zu ladenden Container darstellt.

Anschließend begibt sich der Fahrer des LKWs 7 in einen Anmelderaum 39, um mittels der Magnetkarte die Bereitschaft zum Be- bzw. Entladen des LKWs 7 zu signalisieren. Das DV-System überprüft die Daten auf der Magnetkarte mit denen aus der Parkposition 8 des LKWs gewonnenen Daten und generiert einen bei Übereinstimmung einen Auftrag für den Stapelkran 3. Der Stapelkran 3 nimmt den zu ladenden Container 1 aus dem Containerlager 2 auf und beginnt die Beladung des LKWs 7 entsprechend dem ab Fig. 7 beschriebenen Verfahren.

Des weiteren zeigt Fig. 12 einen Toleranzbereich 40. Innerhalb einer jeden Parkposition 8 ist das Lastaufnahmemittel 3.4 des Stapelkrans 3 nur innerhalb dieses speziellen Toleranzbereich 40 aus Sicherheitsgründen verfahrbar.

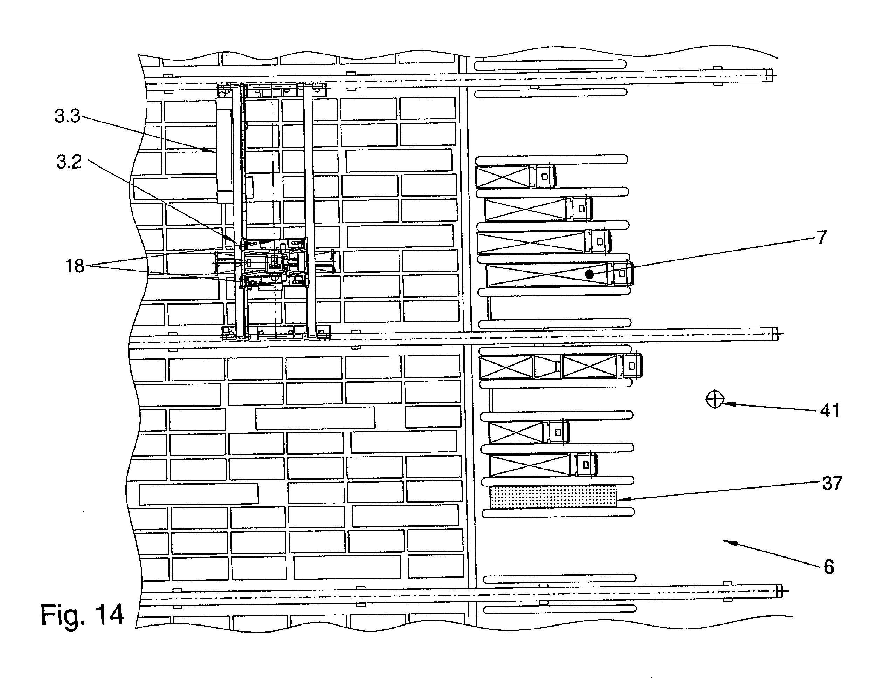

Fig. 14 zeigt ein Containerlager 2 mit einem Referenzpunkt 41.

### Bezugszeichenliste

- 1: Container
- 2: Containerlager
- 3: Automatischer Containerstapelkran
- 3.1: Brücke
- 3.2: Katze
- 3.3: Mast
- 3.4: Lastaufnahmemittel
- 4: Kranbahn
- 5: Abgrenzung
- 6: Be- und Entladebereich
- 7: LKW
- 7.1: Trailer
- 8: Parkposition
- 8.1: Betontröge
- 8.2: Querstreben
- 9: Räder
- 10: Kamera an der Parkposition
- 11: Blickwinkel von Kamera 10
- 12: Monitor mit Bild von Kamera 10
- 13: Twistlocks
- 14: Fadenkreuz der ersten benutzerdefinierten Oberfläche
- 15: vertikale Lage der Parkposition
- 16: Diagonalen
- 17: Schnittpunkt von 16
- 18: seitlich an dem ACS 3 angebrachtes Kamerasystem
- 19: Blickwinkel von Kamera 18
- 19.1: Blickwinkel von Kamera 18
- 19.2: Blickwinkel von Kamera 18
- 20: zweite benutzerdefinierte Oberfläche mit den Bildern von den Kameras 18
- 22: Fehlstellung eines Twistlocks
- 23: eingeblendete Kontur des Containers 1
- 24: automatisches Containerterminal
- 25: Identifikationsbereich
- 26: Wege
- 27: Kameras zur Identifizierung
- 28: amtl. Kennzeichen des LKWs 7
- 29: amtl. Kennzeichen des Trailers 7.1
- 30: Identifikationsnummer eines Containers 1
- 31: Ladeplattform des LKWs 7
- 32: Seite des LKWs 7
- 33: Draufsicht auf den LKW 7
- 34: Höhe der Befestigungsmittel der Ladeplattform 31
- 35: Höhe der Befestigungsmittel des Containers 1
- 36: Kamera in der Parkposition 8 im alternativen Verfahren
- 37: Abstand des LKWs 7 zur Abgrenzung 5
- 38: Untergrund
- 39: Anmelderaum
- 40: Toleranzbereich
- 41: Referenzpunkt
- 42.1: Sichtbereich 1 des Kamerasystems 18.
- 42.2: Sichtbereich 2 des Kamerasystems 18

## Patentansprüche

1. Verfahren zum Lastumschlag in einem Containerlage (2) für Norm-Container (1), mit einem das Containerlager (2) bedienenden, durch ein DV-System einer Logistikverwaltung steuerbaren Stapelkran (3) für die Container (1), der zwischen einem Lagerplatz eines jeden Containers (1) und einer Ladeplattform (31) eines in dem Bereich des Containerlagers (2) verfahrbaren Transportfahrzeuges (7) für den Container (1) verfahrbar ist, wobei der Stapelkran (3) zum Absetzen des Containers (1) auf die Ladeplattform (31) ein Lastaufnahmemittel (3.4) aufweist, das gegenüber dieser ausrichtbar ist, **gekennzeichnet durch** die Abfolge der folgenden Arbeitsschritte beim Beladen des Transportfahrzeuges (7):
a) Das Transportfahrzeug (7) wird identifiziert und die **dadurch** generierten Daten werden an das DV-System der Logistikverwaltung übermittelt,
b) mittels eines kalibrierten Kamerasystems (10) werden definierte Identifikationspunkte auf der Ladeplattform (31) des Transportfahrzeugs (7) erfasst und deren Koordinaten an das DV-System der Logistikverwaltung übermittelt,
c) das DV-System der Logistikverwaltung vergleicht die Koordinaten der Identifikationspunkte mit im DV-System abgelegten Daten des zu ladenden Containers (1) und ermittelt die diesem Container (1) zuzuordnenden Befestigungsmittel (13) und Lagekoordinate auf der Ladeplattform (31) des Transportfahrzeuges (7),
d) der Stapelkran (3) fährt computergesteuert mit dem zu ladenden Container (1) über die Ladeplattform (31) des Transportfahrzeuges (7), exakt deckungsgleich und oberhalb der Lagekoordinate, wobei die Lagekoordinate **durch** die vertikale Lage der Ladeplattform (3) und **durch** den (17) Diagonalen (16) der Identifikationspunkte der Ladeplatfform (31) beschrieben wird, die die absolute Zielposition des Containers (1) beschreibt
e) mittels eines an der Katze (3.2) des Stapelkrans (3) angebrachten kalibrierten Kamerasystems (10) werden die Befestigungsmittel (13) der Ladeplattform (31) erfasst, und der Container (1) wird ggf. derart bewegt, dass die Befestigungsmittel (13) des Containers (1) deckungsgleich über den zugeordneten Befestigungsmitteln (13) der Ladeplattform (31) stehen,
f) der Container (1) wird derartig auf der Ladeplattform (31) des Transportfahrzeugs (7) abgesetzt, dass die Befestigungsmittel (13) des Containers (1) und die zugeordneten Befestigungsmittel (13) der Ladeplattform (31) am Ende des Absetzvorgangs formschlüssig ineinander greifen.

2. Verfahren zum Lastumschlag in einem Containerlager (2) für Norm-Container (1), mit einem das Containerlager (2) bedienenden, durch ein DV-System einer Logistikverwaltung steuerbaren Stapelkran (3) für die Container (1) der zwischen einem Lagerplatz eines jeden Containers (1) und einer Ladeplattform (31) eines in dem Bereich des Containenagers (2) verfahrbaren Transportfahrzeuges (7) für den Container (1) verfahrbar ist, wobei der Stapelkran (3) zum Aufnehmen des Containers (1) von der Ladeplattform (31) ein Lastaufnahmemittel (3.4) aufweist, das gegenüber dieser ausrichtbar ist, **gekennzeichnet durch** die Abfolge der folgenden Arbeitsschritte beim Entladen eines Transportfahrzeuges (7).
a) Das Transportfahrzeug (7) und der zu entladene Container (1) werden identifiziert und die **dadurch** generierten Daten werden an das DV-System der Logistikverwaltung übermittelt,
b) mittels eines kalibrierten Kamerasystems (10) werden definierte Identifikationspunkte des Containers (1) erfasst und deren Koordinaten an das DV-System der Logistikverwaltung übermittelt,
c) das DV-System der Logistikverwaltung ermittelt aus den Identifikationspunkten die Befestigungsmittel (13) und Lagekoordinate des Containers (1),
d) der Stapelkran (2) fährt computergesteuert über den Container (1), exakt deckungsgleich und oberhalb der Lagekoordinate, wobei die Lagekoordinate durch die vertikale Lage der Oberkante der Identifikationspunkte des Containers (1), und **durch** den Schnittpunkt (17) der Diagonalen (16) der Identifikationspunkte des Containers (1) beschrieben wird, die die absolute Zielposition des Lastaufnahmemittels (3,4) beschreibt,
e) mittels eines an der Katze (3.2) des Stapelkrans (3) angebrachten kalibrierten Kamerasystems (18) werden die Befestigungsmitte (13) des Containers (1) erfasst, und das Lastaufnahmemittel (3.4) wird ggf. derart bewegt, dass die Befestigungsmittel (13) des Lastaufnahmemittels (3.4) des Stapelkrans (3) deckungsgleich über den zugeordneten Befestigungsmitteln (13) des Containers (1) stehen,
f) das Lastaufnahmemittel (3.4) wird derartig an den Container (1) herangeführt, dass die Befestigungsmittel (13) des Lastaufnahmemittels (3.4) und die Befestigungsmittel (13) des Containers (1) formschlüssig ineinander greifen.

3. Verfahren nach Anspruch 1 oder 2, **dadurch gekennzeichnet, dass** das Transportfahrzeug (7) bzw. des zu entladenden Containers (1) mittels eines Kamerasystems (10) identifiziert wird.

4. Verfahren nach einem der Ansprüche 1 bis 3, **dadurch gekennzeichnet, dass** zur Erfassung der Koordinaten der ldentifikationspunkte der Ladeplattform (31) bzw. der tdentifikationspunkte des Containers (1) ein Bediener, unterstützt durch eine benutzerdefinierte Oberfläche auf einem Bildschirm (12) des DV-Systems der Logistikverwaltung, mit einem Markierungsmechanismus die Identifikationspunkte der Ladeplattform (31) bzw. die ldentifikationspunkte des Containers (1) auf der benutzerdefinierten Oberfläche anwählt.

5. Verfahren nach einem der Ansprüche 1 bis 4, **dadurch gekennzeichnet dass** die Koordinaten der Identifikationspunkte der Ladeplattform (3) bzw. die identifikationspunkte des Containers (1) durch ein Computersystem automatisch erfasst und an die Logistikverwaltung übermittelt werden.

6. Verfahren nach einem der Ansprüche 1 bis 5, **dadurch gekennzeichnet, dass** die Erfassung der Koordinaten der Ladeplattform (31) des Transportfahrzeugs (2) in dessen Be- und Entladebereich (6) bzw. der Koordinaten der Ladeplattform des Containers (1) in dessen Be- und Entladebereich (6) erfolgt.

7. Verfahren nach einem der Ansprüche 1 bis 6, **dadurch gekennzeichnet, dass** die Erfassung der Koordinaten der Ladeplattform (31) des Transportfahrzeugs (1) bzw. der Koordinaten des Containers (1) im Identifikationsbereich (25) erfolgt.

8. Verfahren nach einem der Ansprüche 1 bis 7, **dadurch gekennzeichnet, dass** die vertikale Lage der Ladeplattform (31) und der Schnittpunkt (17) der Diagonalen (16) der Identifikationspunkte der Ladeplattform (31) bzw. die vertikale Lage der Oberkante der Identifikationspunkte des Containers (1) und der Schnittpunkt (117) der Diagonalen (16) der Identifikationspunkte des Container (1) die relative Zielposition des Containers (1) beschreiben.

9. Verfahren nach einem der Ansprüche 1 bis 8, **dadurch gekennzeichnet, dass** die Lagekoordinate durch die absolute Zielposition des Containers (1) bzw. des Lastaufnahmemittels (3.4) beschrieben wird, die sich aus den mittels einer Kamera (10) ermittelten Koordinaten des in der Parkposition (8) befindlichen Transportfahrzeugs (7) und der relativen Zielposition des Containers (1) bzw. des Lastaufnahmemittels (3.4) zusammensetzt.

10. Verfahren nach einem der Ansprüche 1 bis 9, **dadurch gekennzeichnet, dass** der Stapelkran (3) derart in Reichweite der Ladeplattform (31) bzw. des Containers (1) bewegt wird, dass der Schnittpunkt (17) der Diagonalen (16) der Befestigungsmittel (13) des Containers (2) bzw. des Lastaufnahmemittels (3.4) deckungsgleich im Lot über dem Schnittpunkt (17) der Diagonalen (16) der Befestigungsmittel (13) der Ladeplattform (31) bzw. des Containers (1) steht.

11. Verfahren nach einem der Ansprüche 1 bis 10, **dadurch gekennzeichnet, dass** eine zweite benutzerdefinierte Oberfläche (20) vier Quadranten aufweist, die jeweils ein Paar Befestigungsmittel (13) darstellen, wobei das Paar jeweils aus einem Befestigungsmittel (13) der Ladeplattform (31) bzw. des Containers (1) abgebildet durch ein Bild des Kamerasystems (10), und aus dem zugeordneten Befestigungsmittel (13) des Containers (1) bzw. des Lastaufnahmemittels (3.4) besteht, abgebildet durch eine Einblendung einer computerberechneten Kontur des Containers (1) bzw. des Lastaufnahmemittels (3.4) und des Befestigungsmittels (13) des Containers (1) bzw. des Lastaufnahmemittels (3.4) über dem Bild.

12. Verfahren nach einem der Ansprüche 1 bis 11, **dadurch gekennzeichnet, dass** die ggf. vorhandene Abweichung der Lage des zu ladenden Containers (1) gegenüber der Lage der Ladeplattform (31) bzw. der Lage des Lastaufnahmemittels (3.4) gegenüber der Lage des zu entladenden Containers (1) im DV-System der Logistikverwaltung zur Feinpositionierung bestimmt werden kann, indem die zweite benutzerdefinierte Oberfläche (20) der Logistikverwaltung ein Markierungsmechanismus aufweist, mit dem der Bediener mindestens einen Identifikationspunkt der Ladeplattform (31) bzw. des Containers (1) anwählt.

13. Verfahren nach einem der Ansprüche 1 bis 12, **dadurch gekennzeichnet, dass** die ggf. vorhandene Abweichung der Lage des zu ladenden Containers (1) gegenüber der Lage der Ladeplattform (31) zur Feinpositionierung bzw. der Lage des Lastaufnahmemittels (3.4) gegenüber der Lage des zu entladenden Containers (1) durch ein Computersystem automatisch erkannt wird.

14. Verfahren nach einem der Ansprüche 1 bis 13, **dadurch gekennzeichnet, dass** bei einer vorhandenen Abweichung der Lage des zu ladenden Containers (1) gegenüber der Lage der Ladeplattform der Container (1) bzw. der Lage des Lastaufnahmemittels (3.4) gegenüber dem zu entladenen Container (1) das Lastaufnahmemittel (3.4) so gedreht wird, dass die Befestigungsmittel (13) des Containers (1) deckungsgleich im Lot über den Befestigungsmitteln (13) der Ladeplattform (31) bzw. die Befestigungsmittel (13) des Lastaufnahmemittels (3.4) deckungsgleich im Lot über den Befestigungsmitteln (13) des Containers (1) stehen.

15. Verfahren nach einem der Ansprüche 1 bis 14, **dadurch gekennzeichnet, dass** das Absetzen und Loslösen des Containers (1) vom Lastaufnahmemittel (3.4) bzw. Absetzen des Lastaufnahmemittels (3,4) des Stapelkrans (3) auf den Container (1) bis zum formschlüssigen Ineinandergreifen der Befestigungsmittel (13) durch den Bediener gesteuert wird.

16. Verfahren zum Justieren der Lage eines Stapelkrans (3) in einem Containerlager (2), zur Durchführung der Verfahrens nach einem oder mehreren der Ansprüche 1 oder 2 sowie 3 bis 15, mit einem zur Lageerfassung von umzuschlagenden Containern (1) an der Katze (3.2) des Stapelkrans (3) befestigtem Kamerasystem (18) mit einem zur Lageerfassung des Stapelkrans (3) absoluten Längenmeßsystem, **gekennzeichnet durch** den Ablauf der folgenden Arbeitschritte, unter Verwendung vorkalibrierter Kameras (18).
a) Der Stapelkran (3) fährt derart über einen an einer beliebigen Position innerhalb des Containerlagers (2) angebrachten Referenzpunkt, dass mindestens eine Kamera des Kamerasystems (18) den Referenzpunkt erfasst,
b) das DV-System der Logistikverwaltung vergleicht die Lage des Referenzpunktes mit der abgespeicherten Lage des Referenzpunktes und ermittelt bei ggf. vorhandener Abweichung einen Offset.

17. Verfahren nach Anspruch 16, **dadurch gekennzeichnet, dass** das Containerlager (2) mehrere Referenzpunkte aufweist, die von den Kameras (18) des Stapelkrans (3) erfassbar sind.

18. Verfahren zum Justieren der Lage einer Kamera (18), die an einem Stapelkran (3) angebracht ist, der sich in einem Containerlager (2) befindet, zur Durchführung des Verfahrens nach einem oder mehreren der Ansprüche 1 oder 2 sowie 3 bis 15, mit einem zur Lageerfassung von umzuschlagenden Containern (1) am Stapelkran (3) befestigtem Kamerasystem (18), mit einem zur Lageerfassung des Stapelkrans (3) absoluten Längenmeßsystem,
**dadurch gekennzeichnet,**
**dass** das Containerlager (2) einen Superreferenzpunkt aufweist und dass am Stapelkran (3) eine Kamera (18) angebracht ist, die gegenüber diesem mittels des Superreferenzpunktes justierbar ist.

## Claims

1. Method of load transfer in a container storage area (2) for standard containers (1), having a stacking crane (3) for the containers (1) which serves the container storage area (2) and can be controlled by a logistics management data processing (DP-) system, said stacking crane being able to move between a storage place for each container (1) and a loading platform (31) of a transport vehicle (7) for the container (1) which transport vehicle which can travel in the region of the container storage area (2), wherein the stacking crane (3) comprises a load receiving member (3.4) for setting down the container (1) on to the loading platform (31), said load receiving member can be oriented with respect thereto, **characterised by** the sequence of the following working steps during loading of the transport vehicle (7):
a) the transport vehicle (7) is identified and the data generated thereby is transmitted to the logistics management DP-system,
b) a calibrated camera system (10) is used to detect defined identification points on the loading platform (31) of the transport vehicle (7) and the coordinates thereof are transmitted to the logistics management DP-system,
c) the logistics management DP-system compares the coordinates of the identification points with data of the container (1) to be loaded as stored in the DP-system and determines the fastening means (13) to be allocated to this container (1) and position coordinates on the loading platform (31) of the transport vehicle (7),
d) the stacking crane (3) moves under computer control with the container (1), which is to be loaded, over the loading platform (31) of the transport vehicle (7) precisely in congruent fashion and above the position coordinate, wherein the position coordinate is described by the vertical position of the loading platform (3) and by the point of intersection (17) of the diagonals (16) of the identification points of the loading platform (31) which describes the absolute target position of the container (1),
e) a calibrated camera system (10) mounted on the trolley (3.2) of the stacking crane (3) is used to detect the fastening means (13) of the loading platform (31), and the container (1) is optionally moved in such a manner that the fastening means (13) of the container (1) are positioned congruently above the allocated fastening means (13) of the loading platform (31),
f) the container (1) is set down on the loading platform (31) of the transport vehicle (7) such that the fastening means (13) of the container (1) and the allocated fastening means (13) of the loading platform (31) engage one another in a positive-locking manner at the end of the set-down procedure.

2. Method of load transfer in a container storage area (2) for standard containers (1), having a stacking crane (3) for the containers (1) which serves the container storage area (2) and can be controlled by a logistics management DP-system, said stacking crane being able to move between a storage place for each container (1) and a loading platform (31) of a transport vehicle (7) for the container (1), which transport vehicle can travel in the region of the container storage area (2), wherein the stacking crane (3) comprises a load receiving member (3.4) for receiving the container (1) from the loading platform (31), said load receiving member can be oriented with respect thereto, **characterised by** the sequence of the following working steps during unloading of the transport vehicle (7):
a) the transport vehicle (7) and the container (1) to be unloaded are identified and the data generated thereby are transmitted to the logistics management DP-system,
b) a calibrated camera system (10) is used to detect defined identification points of the container (1) and the coordinates thereof are transmitted to the logistics management DP-system,
c) the logistics management DP-system uses the identification points to determine the fastening means (13) and position coordinates of the container (1),
d) the stacking crane (3) drives under computer control over the container, precisely in congruent fashion and above the position coordinate, wherein the position coordinate is described by the vertical position of the upper edge of the identification points of the container (1) and by the point of intersection (17) of the diagonals (16) of the identification points of the container (1) which describes the absolute target position of the load receiving member (3.4),
e) a calibrated camera system (18) mounted on the trolley (3.2) of the stacking crane (3) is used to detect the fastening means (13) of the container (1), and the load receiving member (3.4) is optionally moved so that the fastening means (13) of the load receiving member (3.4) of the stacking crane (3) are positioned congruently above the allocated fastening means (13) of the container (1),
f) the load receiving member (3.4) is guided up to the container (1) such that the fastening means (13) of the load receiving member (3.4) and the fastening means (13) of the container (1) engage one another in a positive-locking manner.

3. Method as claimed in claim 1 or 2, **characterised in that** the transport vehicle (7) or the container (1) to be unloaded is identified by means of a camera system (10).

4. Method as claimed in any one of claims 1 to 3, **characterised in that** in order to detect the coordinates of the identification points of the loading platform (31) or the identification points of the container (1) a user, assisted by a user-defined interface on a display screen (12) of the logistics management DP-system, uses a marking mechanism to select the identification points of the loading platform (31) or the identification points of the container (1) on the user-defined interface.

5. Method as claimed in any one of claims 1 to 4, **characterised in that** the coordinates of the identification points of the loading platform (31) or the identification points of the container (1) are automatically detected by a computer system and transmitted to the logistics management.

6. Method as claimed in any one of claims 1 to 5, **characterised in that** the coordinates of the loading platform (31) of the transport vehicle (7) are detected in the loading and unloading region (6) thereof or the coordinates of the loading platform of the container (1) are detected in the loading and unloading region (6) thereof.

7. Method as claimed in any one of claims 1 to 6, **characterised in that** the coordinates of the loading platform (31) of the transport vehicle (7) or the coordinates of the container (1) are detected in the identification region (25).

8. Method as claimed in any one of claims 1 to 7, **characterised in that** the vertical position of the loading platform (31) and the point of intersection (17) of the diagonals (16) of the identification points of the loading platform (31) or the vertical position of the upper edge of the identification points of the container (1) and the point of intersection (17) of the diagonals (16) of the identification points of the container (1) describe the relative target position of the container (1).

9. Method as claimed in any one of claims 1 to 8, **characterised in that** the position coordinate is described by the absolute target position of the container (1) or of the load receiving member (3.4), which is made up of the coordinates, as detected by means of a camera (10), of the transport vehicle (7) located in the parking position (8) as detected by means of a camera (10), and the relative target position of the container (1) or of the load receiving member (3.4).

10. Method as claimed in any one of claims 1 to 9, **characterised in that** the stacking crane (2) is moved into reach of the loading platform (31) or of the container (1) in such a manner that the point of intersection (17) of the diagonals (16) of the fastening means (13) of the container (1) or of the load receiving member (3.4) is positioned in congruent fashion perpendicularly above the point of intersection (17) of the diagonals (16) of the fastening means (13) of the loading platform (31) or of the container (1).

11. Method as claimed in any one of claims 1 to 10, **characterised in that** a second user-defined interface (20) comprises four quadrants which each represent a pair of fastening means (13), wherein the pair consists in each case of a fastening means (13) of the loading platform (31) or of the container (1), as illustrated by an image of the camera system (10), and of the allocated fastening means (13) of the container (1) or of the load receiving member (3.4), as illustrated by a superimposition of a computer-calculated contour of the container (1) or of the load receiving member (3.4) and of the fastening means (13) of the container (1) or of the load receiving member (3.4) over the image.

12. Method as claimed in any one of claims 1 to 11, **characterised in that** any deviation in the position of the container (1), which is to be loaded, from the position of the loading platform (31) or any deviation in the position of the load receiving member (3.4) from the position of the container (1) to be unloaded can be determined in the logistics management DP-system for the purposes of precision positioning, **in that** the second user-defined interface (20) of the logistics management comprises a marking mechanism, with which the operator selects at least one identification point of the loading platform (31) or of the container (1).

13. Method as claimed in any one of claims 1 to 12, **characterised in that** any deviation in the position of the container (1), which is to be loaded, from the position of the loading platform (31) for the purposes of precision positioning or any deviation in the position of the load receiving member (3.4) from the position of the container (1) to be unloaded is recognised automatically by a computer system.

14. Method as claimed in any one of claims 1 to 13, **characterised in that** in the event of a deviation in the position of the container (1), which is to be loaded, from the position of the loading platform of the containers (1) or in the event of a deviation in the position of the load receiving member (3.4) from the container (1) to be unloaded the load receiving member (3.4) is rotated in such a manner that the fastening means (13) of the container (1) are positioned in congruent fashion perpendicularly above the fastening means (13) of the loading platform (31) or the fastening means (13) of the load receiving member (3.4) are positioned in congruent fashion perpendicularly above the fastening means (13) of the container (1).

15. Method as claimed in any one of claims 1 to 14, **characterised in that** the procedures of setting down and releasing the container (1) from the load receiving member (3.4) or of setting down the load receiving member (3.4) of the stacking crane (3) on to the container (1) until the fastening means (13) engage one another in a positive-locking manner are controlled by the operator.

16. Method of adjusting the position of a stacking crane (3) in a container storage area (2) to carry out the method as claimed in any one or several of claims 1 or 2 and 3 to 15, having a camera system (18) which is mounted on the trolley (3.2) of the stacking crane (3) for detection of the position of containers (1) to be handled, and having an absolute length measuring system for detection of the position of the stacking crane (3), **characterised by** the sequence of the following steps using pre-calibrated cameras (18):
a) the stacking crane (3) moves over a reference point provided at any position within the container storage area (2) such that at least one camera of the camera system (18) detects the reference point,
b) the logistics management DP-system compares the position of the reference point with the stored position of the reference point and determines an offset if any deviation exists.

17. Method as claimed in claim 16, **characterised in that** the container storage area (2) comprises several reference points which can be detected by the cameras (18) of the stacking crane (3).

18. Method of adjusting the position of a camera (18) which is mounted on a stacking crane (3) which is located in a container storage area (2), for carrying out the method as claimed in one or several of claims 1 or 2 and 3 to 15, having a camera system (18) which is mounted on the stacking crane (3) for detection of the position of containers (1) to be handled, and having an absolute length measuring system for detection of the position of the stacking crane (3), **characterised in that** the container storage area (2) comprises a super-reference point and that mounted on the stacking crane (3) is a camera (18) which can adjusted with respect thereto by means of the super-reference point.

## Revendications

1. Procédé de transbordement de charge dans un espace (2) de stockage de conteneurs pour des conteneurs (1) normalisés, avec un pont roulant gerbeur (3) pour desservir l'espace (2) de stockage de conteneurs, commandé par un système de traitement de données d'une logistique pour les conteneurs (1), qui peut être déplacé entre une place de stockage d'un conteneur (1) et une plate-forme de chargement (31) d'un véhicule de transport (7) du conteneur (1), mobile dans la zone (2) de stockage des conteneurs, le pont roulant gerbeur (3) présentant un moyen (3, 4) de préhension d'une charge, qui peut être positionné par rapport à celui-ci, pour déposer le conteneur (1) sur la plate-forme (31) de chargement,
**caractérisé par** la succession des étapes suivantes lors du chargement du véhicule de transport (7):
a) le véhicule de transport (7) est identifié, et les données ainsi générées sont communiquées au système de traitement de données de la logistique,
b) des points d'identification définis sur la plate-forme de chargement (31) du véhicule de transport (7) sont identifiés au moyen d'un système de caméra (10) calibré, et leurs coordonnées sont communiquées au système de traitement de données de la logistique,
c) le système de traitement de données de la logistique compare les coordonnées des points d'identification avec des données sur le conteneur (1) à charger, stockées dans le système de traitement de données, et détermine les moyens de fixation (13) et les coordonnées de positionnement sur la plate-forme de chargement (31) du véhicule de transport (7), associés à ce conteneur (1),
d) le pont roulant gerbeur (3) se déplace avec le conteneur (1) à charger, sous la commande d'un ordinateur, au-dessus de la plate-forme de chargement (31) du véhicule de transport (7) en coïncidence exacte, et au-dessus des coordonnées de positionnement, les coordonnées de positionnement étant décrites par la position verticale de la plate-forme de chargement (3) et par le point d'intersection (17) des diagonales (16) des points d'identification de la plate-forme de chargement (31), qui décrit la position de destination absolue du conteneur (1),
e) les moyens de fixation (13) de la plate-forme de chargement (31) sont déterminés au moyen d'un système de caméra (10) calibré monté sur le chariot (3.2) du pont roulant gerbeur (3), et le conteneur (1) est éventuellement déplacé de telle sorte que les moyens de fixation (13) du conteneur (1) se trouvent en coïncidence au-dessus des moyens de fixation (13) associés de la plate-forme de chargement (31),
f) le conteneur (1) est déposé sur la plate forme de chargement (31) du véhicule de transport (7) de telle sorte que les moyens de fixation (13) du conteneur (1) et les moyens de fixation (13) associés de la plate forme de chargement (31) s'engagent positivement l'un avec l'autre à la fin du processus de dépôt.

2. Procédé de transbordement de charge dans un espace (2) de stockage de conteneurs pour des conteneurs (1) normalisés, avec un pont roulant gerbeur (3) pour desservir l'espace (2) de stockage de conteneurs, commandé par un système de traitement de données d'une logistique pour les conteneurs (1), qui peut être déplacé entre une place de stockage d'un quelconque conteneur (1) et une plate-forme de chargement (31) d'un véhicule de transport (7) du conteneur (1), mobile dans la zone (2) de stockage de conteneurs, le pont roulant gerbeur (3) présentant un moyen (3, 4) de préhension d'une charge, qui peut être positionné par rapport à celui-ci, pour déposer le conteneur (1) sur la plate-forme (31) de chargement,
**caractérisé par** la succession des étapes suivantes lors du chargement du véhicule de transport (7):
a) le véhicule de transport (7) et le conteneur (1) à décharger sont identifiés, et les données ainsi générées sont communiquées au système de traitement de données de la logistique,
b) des points d'identification définis du conteneur (1) sont identifiés au moyen d'un système de caméra (10) calibré, et leurs coordonnées sont communiquées au système de traitement de données de la logistique,
c) le système de traitement de données de la logistique détermine les moyens de fixation (13) et les coordonnées de positionnement du conteneur (1) à partir des points d'identification,
d) le pont roulant gerbeur (3) se déplace sous la commande d'un ordinateur, au-dessus du conteneur (1), en coïncidence exacte, et au-dessus des coordonnées de positionnement, les coordonnées de positionnement étant décrites par la position verticale du bord supérieur des points d'identification du conteneur (1), et par le point d'intersection (17) des diagonales (16) des points d'identification du conteneur (1), qui décrit la position de destination absolue du moyen (3, 4) de préhension de la charge,
e) les moyens de fixation (13) du conteneur (1) sont déterminés au moyen d'un système de caméra (18) calibré, monté sur le chariot (3.2) du pont roulant gerbeur (3), et le moyen (3, 4) de préhension de la charge est éventuellement déplacé de telle sorte que les moyens de fixation (13) du moyen (3, 4) de préhension de la charge du popnt roulant gerbeur (3) se trouvent en coïncidence au-dessus des moyens de fixation (13) associés du conteneur (1),
f) le moyen (3, 4) de préhension de la charge est amené vers le conteneur (1) de telle sorte que les moyens de fixation (13) du moyen (3, 4) de préhension de la charge et les moyens de fixation (13) du conteneur (1) s'engagent positivement l'un avec l'autre.

3. Procédé selon la revendication 1 ou 2, **caractérisé en ce que** le véhicule de transport (7), respectivement le conteneur (1) à décharger, est identifié au moyen d'un système de caméra (10).

4. Procédé selon l'une des revendications 1 à 3, **caractérisé en ce que**, pour déterminer les coordonnées des points d'identification de la plate forme de chargement (31), respectivement des points d'identification du conteneur (1), un opérateur, assisté par une interface définie par l'utilisateur d'un écran (12) du système de traitement des données de la logistique, choisit au moyen d'un mécanisme de marquage, sur l'interface définie par l'utilisateur, les points d'identification de la plate forme de chargement (31), respectivement les points d'identification du conteneur (1).

5. Procédé selon l'une des revendications 1 à 4, **caractérisé en ce que** les coordonnées des points d'identification de la plate forme de chargement (31), respectivement les points d'identification du conteneur (1) sont déterminés automatiquement, et sont communiqués à la logistique, par un système d'ordinateur.

6. Procédé selon l'une des revendications 1 à 5,
**caractérisé en ce que** les coordonnées de la plate forme de chargement (31) du véhicule de transport (7) dans sa zone (6) de chargement et de déchargement, respectivement les coordonnées de la plate forme de chargement du conteneur (1) dans sa zone (6) de chargement et de déchargement, sont déterminées.

7. Procédé selon l'une des revendications 1 à 6, **caractérisé en ce que** les coordonnées de la plate forme de chargement (31) du véhicule de transport (7), respectivement les coordonnées du conteneur (1) dans la zone (25) d'identification, sont déterminées.

8. Procédé selon l'une des revendications 1 à 7, **caractérisé en ce que** la position verticale de la plate forme de chargement (31) et le point d'intersection (17) des diagonales (16) des points d'identification de la plate forme de chargement (31), respectivement la position verticale des bords supérieurs des points d'identification du conteneur (1) et le point d'intersection (17) des diagonales (16) des points d'identification du conteneur (1) décrivent la position de destination relative du conteneur (1).

9. Procédé selon l'une des revendications 1 à 8, **caractérisé en ce que** les coordonnées de positionnement sont décrites par la position de destination absolue du conteneur (1), respectivement du moyen (3, 4) de préhension de la charge, qui se compose des coordonnées du véhicules de transport (7) se trouvant en position de parking (8), déterminées au moyen d'une caméra (10), et de la position de destination relative du conteneur (1), respectivement du moyen (3, 4) de préhension de la charge.

10. Procédé selon l'une des revendications 1 à 9, **caractérisé en ce que** le pont roulant gerbeur (3) est déplacé dans l'étendue de la plate forme de chargement (31), respectivement du conteneur (1), de telle sorte que le point d'intersection (17) des diagonales (16) des moyens de fixation (13) du conteneur (1), respectivement du moyen (3, 4) de préhension de la charge, se trouve en coïncidence, à plomb au-dessus du point d'intersection (17) des diagonales (16) des moyens de fixation (13) de la plate forme de chargement (31), respectivement du conteneur (1).

11. Procédé selon l'une des revendications 1 à 10, **caractérisé en ce qu'**une second interface (20) définie par l'utilisateur présente quatre quadrants qui représentent chacun une paire de moyens de fixation (13), chaque paire étant constituée d'un moyen de fixation (13) de la plate forme de chargement (31), respectivement du conteneur (1), représenté par une image du système de caméra (10), et du moyen de fixation (13) associé du conteneur (1), respectivement du moyen (3, 4) de préhension de la charge, représenté par un fondu d'un contour du conteneur (1), respectivement du moyen (3, 4) de préhension de la charge, calculé par ordinateur, et du moyen de fixation (13) du conteneur (1), respectivement du moyen (3, 4) de préhension de la charge sur l'écran.

12. Procédé selon l'une des revendications 1 à 11, **caractérisé en ce que** l'écart de position éventuel du conteneur (1) à charger, par rapport à la position de la plate forme de chargement (31), respectivement la position du moyen (3, 4) de préhension de la charge par rapport à la position du conteneur (1) à décharger, peut être déterminé dans le système de traitement des données de la logistique, pour un positionnement fin, lorsque la seconde interface (20), définie par l'utilisateur, de la logistique, présente un mécanisme de marquage avec lequel l'opérateur choisit au moins un point d'identification de la plate forme de chargement (31), respectivement du conteneur (1) .

13. Procédé selon l'une des revendications 1 à 12, **caractérisé en ce que** l'écart de position du conteneur (1) à charger, par rapport à la position de la plate forme de chargement (31) en vue d'un positionnement fin, respectivement la position du moyen (3, 4) de préhension de la charge par rapport à la position du conteneur (1) à décharger, est détectée automatiquement par un système d'ordinateur.

14. Procédé selon l'une des revendications 1 à 13, **caractérisé en ce que** pour un écart existant de la position du conteneur (1) à charger, par rapport à la position de la plate forme de chargement du conteneur (1), respectivement de la position du moyen (3, 4) de préhension de la charge par rapport au conteneur (1) à décharger, le moyen (3, 4) de préhension de la charge est tourné de telle sorte que les moyens de fixation (13) du conteneur (1) se trouvent en coïncidence, à plomb au-dessus des moyens de fixation (13) de la plate forme de chargement (31), respectivement les moyens de fixation (13) du moyen (3, 4) de préhension de la charge se trouvent en coïncidence, à plomb au-dessus des moyens de fixation (13) du conteneur (1).

15. Procédé selon l'une des revendications 1 à 14, **caractérisé en ce que** dépôt et la libération du conteneur (1) du moyen (3, 4) de préhension de la charge, respectivement le dépôt du moyen (3, 4) de préhension de la charge du pont roulant gerbeur (3) sur le conteneur (1) jusqu'à engagement mutuel positif des moyens de fixations (13) est commandé par l'opérateur.

16. Procédé d'ajustement de la position d'un pont roulant gerbeur (3) dans un espace (2) de stockage de conteneurs, pour mettre en oeuvre le procédé selon l'une ou plusieurs des revendications 1 ou 2 et 3 à 15, avec un système de caméra (18) fixé au chariot (3.2) du pont roulant gerbeur (3) pour détecter la position de conteneurs (1) à transborder, avec un système de mesure des longueurs absolues pour détecter la position du pont roulant gerbeur (3), **caractérisé par** la succession des étapes suivantes, en utilisant des caméras (18) précalibrées
a) le pont roulant gerbeur (3) se déplace au-dessus d'un point de référence agencé dans une position quelconque à l'intérieur de l'espace (2) de stockage de conteneurs de telle sorte qu'au moins une caméra du système de caméras (18) détecte le point de référence,
b) le système de traitement de données de la logistique compare la position du point de référence à la position mémorisée du point de référence, et détermine un décalage pour un éventuel écart.

17. Procédé selon la revendication 16, **caractérisé en ce que** l'espace (2) de stockage de conteneurs présente plusieurs points de référence qui sont détectés par les caméras (18) du pont roulant gerbeur (3).

18. Procédé pour ajuster la position d'une caméra (18) montée sur un pont roulant gerbeur (3) qui se trouve dans un l'espace (2) de stockage de conteneurs, pour la mise en oeuvre du procédé selon l'une ou plusieurs des revendications & ou 2, et 3 à 15, avec un système de caméras (18) fixé au pont roulant gerber (3) pour déterminer la position de conteneurs (1) à transborder, avec un système de mesure des longueurs absolues pour déterminer la position du pont roulant gerbeur (3),
**caractérisé en ce que** l'espace (2) de stockage de conteneurs présente un point de référence supérieur, et une caméra (18) est montée sur le pont roulant gerbeur (3), laquelle pour être ajustée par rapport à celui-ci au moyen du point de référence supérieur.
